(19) **Europäisches Patentamt**
**European Patent Office**
**Office européen des brevets**

(11) **EP 2 169 941 A1**

(12) **EUROPEAN PATENT APPLICATION**

(43) Date of publication:
**31.03.2010 Bulletin 2010/13**

(51) Int Cl.:
***H04N 1/405*** (2006.01)     ***G09G 3/20*** (2006.01)

(21) Application number: **09170956.8**

(22) Date of filing: **22.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **26.09.2008 JP 2008247291**

(71) Applicant: **Sony Corporation**
**Tokyo (JP)**

(72) Inventors:
• **Tsukamoto, Makoto**
**TOKYO (JP)**

• **Hirai, Jun**
**TOKYO (JP)**
• **Nishio, Ayataka**
**TOKYO (JP)**
• **Takahashi, Naomasa**
**TOKYO (JP)**

(74) Representative: **Thévenet, Jean-Bruno et al**
**Cabinet Beau de Loménie**
**158, rue de l'Université**
**75340 Paris Cédex 07 (FR)**

(54) **Gradation conversion device and gradation conversion method**

(57)     A gradation conversion device (45) that converts a gradation of an image, includes: dither means (51) for dithering the image by adding random noise to pixel values forming the image; and one-dimensional $\Delta\Sigma$ modulation means (52) for performing one-dimensional $\Delta\Sigma$ modulation on the dithered image.

*FIG.7*

EP 2 169 941 A1

**Description**

BACKGROUND OF THE INVENTION

1. Field of the Invention

The present invention relates to a gradation conversion device, a gradation conversion method, and a program, and specifically to a gradation conversion device, a gradation conversion method, and a program for downsizing and cost reduction of the device, for example.

2. Background Art

For example, in order to display an image of N-bit pixel values (hereinafter, also referred to as "N-bit image") by a display device for displaying an image of M (smaller than N)-bit pixel values, it is necessary to convert the N-bit image into an M-bit image, that is, perform gradation conversion of converting the gradation of the image.

As a method of gradation conversion (gradation conversion method) of an N-bit image into an M-bit image, for example, there is a method of dropping the last (N minus M) bits of the N-bit pixel values and using the rest as M-bit pixel values.

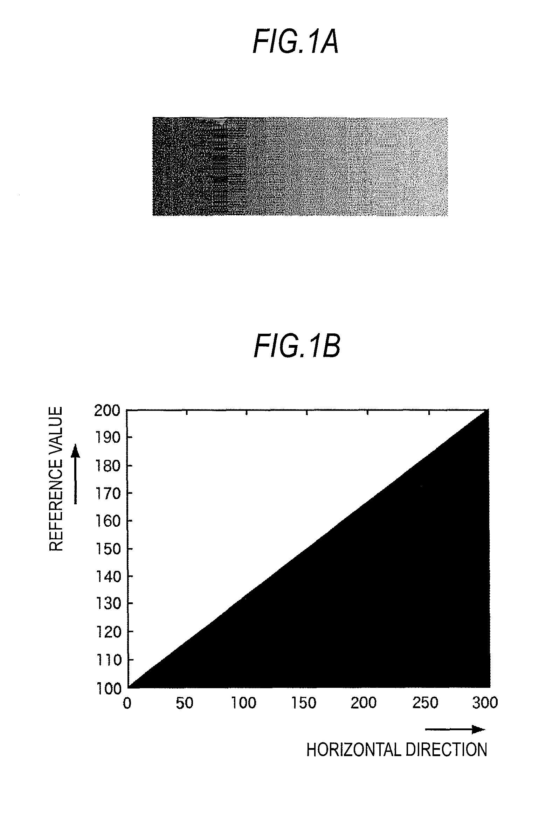

Referring to Figs. 1A to 2B, the gradation conversion method of dropping the last (N minus M) bits of the N-bit pixel values and using the rest as M-bit pixel values will be explained.

Figs. 1A and 1B show an 8-bit gradation image and pixel values on a certain horizontal line in the image.

That is, Fig. 1A shows the 8-bit gradation image.

In the image in Fig. 1A, with respect to the horizontal direction, from left to right, pixel values gradually change from 100 to 200, and the same pixel values are arranged in the vertical direction.

Fig. 1B is the pixel values on a certain horizontal line in the image in Fig. 1A.

The pixel value at the left end is 100 and pixel values become larger toward the right. Further, the pixel value at the right end is 200.

Figs. 2A and 2B show a 4-bit image obtained by dropping the last 4 bits of the 8-bit image in Fig. 1A, and pixel values on a certain horizontal line in the image.

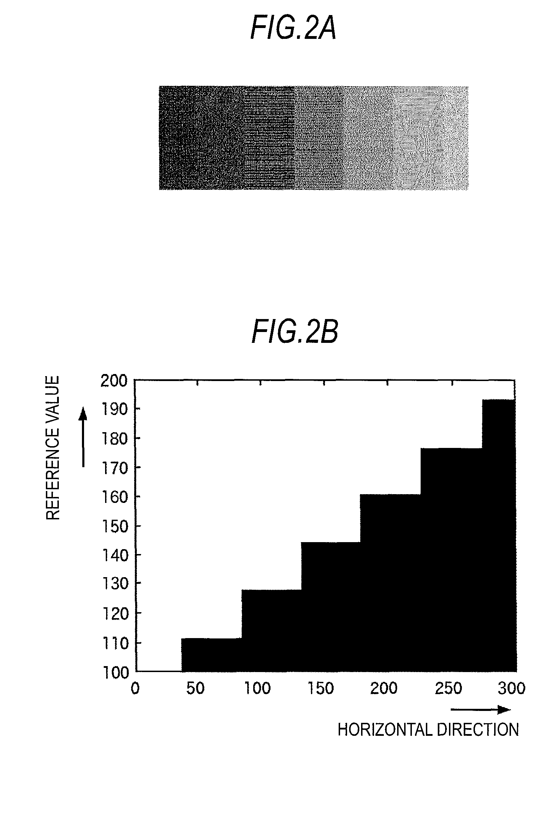

That is, Fig. 2A shows the image quantized into four bits by dropping the last 4 bits of the 8-bit image in Fig. 1A, and Fig. 2B shows the pixel values on a certain horizontal line in the image.

8 bits can represent 256 ($=2^8$) levels, but 4 bits can represent only 16 ($=2^4$) levels. Accordingly, in gradation conversion of dropping the last 4 bits of the 8-bit image, banding that changes of levels are seen like a band is produced.

In a gradation conversion method of preventing production of banding and performing pseudo representation of the gray scale of the image before gradation conversion in the image after gradation conversion, that is, for example, as described above, in a 16-level image obtained by gradation conversion of a 256-level image, as methods of representing 256 levels by 16 levels visually when a human sees the image, there are the random dither method, ordered dither method, and error diffusion method.

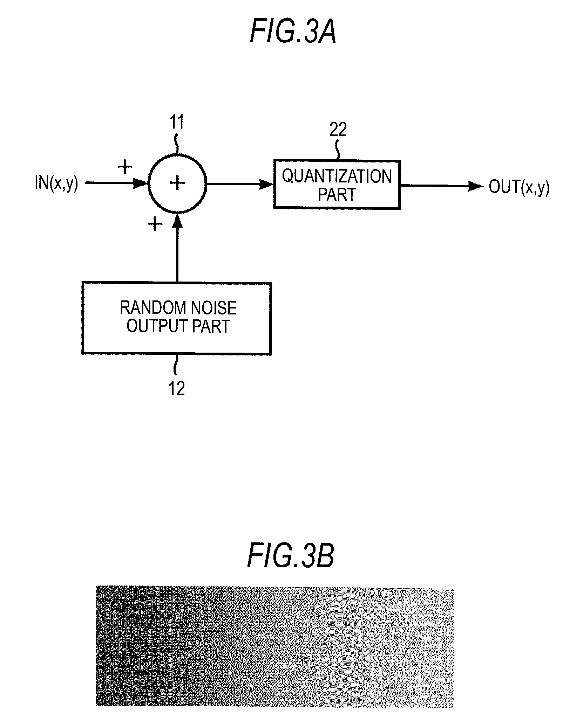

Figs. 3A and 3B are diagrams for explanation of the random dither method.

That is, Fig. 3A shows a configuration example of a gradation conversion device in related art of performing gradation conversion according to the random dither method, and Fig. 3B shows a gradation image obtained by gradation conversion by the gradation conversion device in Fig. 3A.

In Fig. 3A, the gradation conversion device includes a calculation part 11, a random noise output part 12, and a quantization part 13.

To the calculation part 11, for example, pixel values IN(x,y) of the respective pixels (x,y) of an 8-bit image as a target image of gradation conversion (an image before gradation conversion) are supplied in the sequence of raster scan. Note that, the pixel (x,y) indicates a pixel in the position of xth from the left and yth from the top.

Further, to the calculation part 11, random noise from the random noise output part 12 that generates and outputs random noise is supplied.

The calculation part 11 adds the pixel values IN(x,y) and the random noise from the random noise output part 12 and supplies the resulting additional values to the quantization part 13.

The quantization part 13 quantizes the additional values from the calculation part 11 into 4 bits, for example, and outputs the resulting 4-bit quantized values as pixel values OUT(x,y) of the pixels (x,y) of the image after gradation conversion.

In the random dither method, the configuration of the gradation conversion device is simpler, however, as shown in Fig. 3B, noise is highly visible in the image after gradation conversion because the random noise is added to the pixel values IN(x,y), and it is difficult to obtain a good quality image.

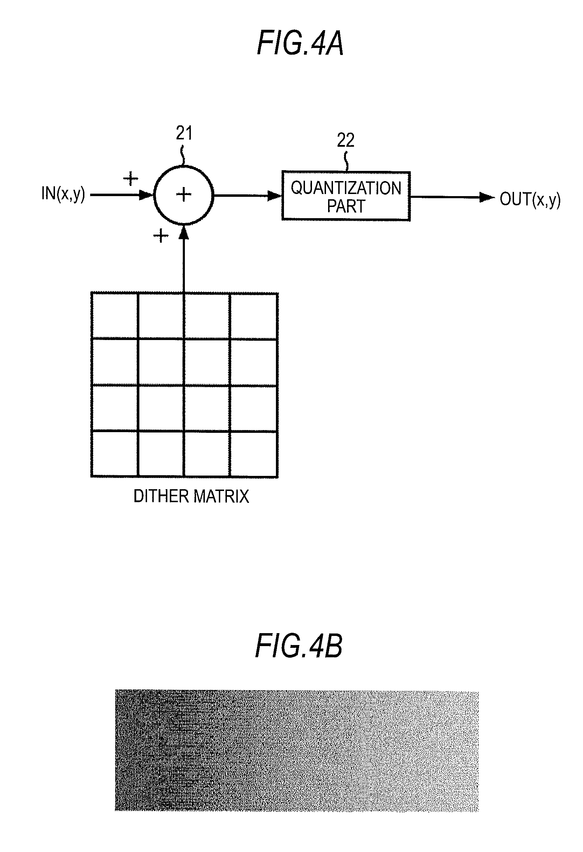

Figs. 4A and 4B are diagrams for explanation of the ordered dither method.

That is, Fig. 4A shows a configuration example of a gradation conversion device in related art of performing gradation conversion according to the ordered dither method, and Fig. 4B shows a gradation image obtained by gradation conversion by the gradation conversion device in Fig. 4A.

In Fig. 4A, the gradation conversion device includes a calculation part 21, and a quantization part 22.

To the calculation part 21, for example, pixel values IN(x,y) of the respective pixels (x,y) of an 8-bit image as a target image of gradation conversion are supplied in the sequence of raster scan.

Further, to the calculation part 21, a dither matrix is supplied.

The calculation part 21 adds the pixel values IN(x,y) and values of the dither matrix corresponding to the positions (x,y) of the pixels (x,y) having the pixel values IN(x,y), and supplies the resulting additional values to the quantization part 22.

The quantization part 22 quantizes the additional values from the calculation part 21 into 4 bits, for example, and outputs the resulting 4-bit quantized values as pixel values OUT(x,y) of the pixels (x,y) of the image after gradation conversion.

In the ordered dither method, the image quality of the image after gradation conversion can be improved compared to that in the random dither method, however, as shown in Fig. 4B, a pattern of the dither matrix may appear in the image after gradation conversion.

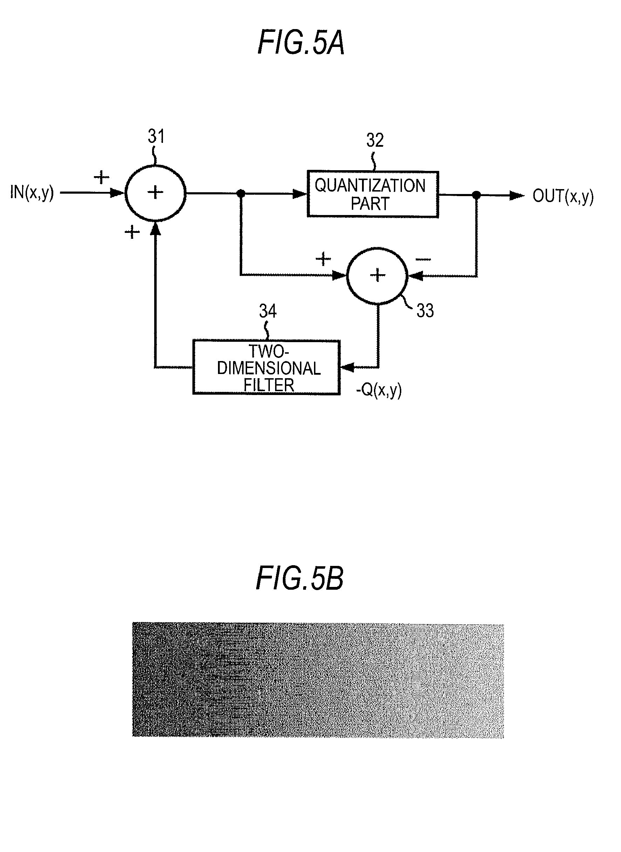

Figs. 5A and 5B are diagrams for explanation of the error diffusion method.

That is, Fig. 5A shows a configuration example of a gradation conversion device in related art of performing gradation conversion according to the error diffusion method, and Fig. 5B shows a gradation image obtained by gradation conversion by the gradation conversion device in Fig. 5A.

In Fig. 5A, the gradation conversion device includes a calculation part 31, a quantization part 32, a calculation part 33, and a two-dimensional filter 34.

To the calculation part 31, for example, pixel values IN(x,y) of the respective pixels (x,y) of an 8-bit image as a target image of gradation conversion are supplied in the sequence of raster scan.

Further, to the calculation part 31, output of the two-dimensional filter 34 is supplied.

The calculation part 31 adds the pixel values IN(x,y) and the output of the two-dimensional filter 34, and supplies the resulting additional values to the quantization part 32 and the calculation part 33.

The quantization part 32 quantizes the additional values from the calculation part 31 into 4 bits, for example, and outputs the resulting 4-bit quantized values as pixel values OUT(x,y) of the pixels (x,y) of the image after gradation conversion.

Further, the pixel values OUT(x,y) output by the quantization part 32 are also supplied to the calculation part 33.

The calculation part 33 obtains quantization errors -Q(x,y) produced by the quantization in the quantization part 32 by subtracting the pixel values OUT(x,y) from the quantization part 32 from the additional values from the calculation part 31, that is, subtracting the output from the quantization part 32 from the input to the quantization part 32, and supplies them to the two-dimensional filter 34.

The two-dimensional filter 34 is a two-dimensional filter of filtering signals, and filters the quantization errors -Q(x,y) from the calculation part 33 and outputs the filtering results to the calculation part 31.

In the calculation part 31, the filtering results of the quantization errors -Q(x,y) output by the two-dimensional filter 34 and the pixel values IN(x,y) are added in the above described manner.

In the gradation conversion device in Fig. 5A, the quantization errors -Q(x,y) are fed back to the input side (calculation part 31) via the two-dimensional filter 34, and a two-dimensional ΔΣ modulator is formed.

According to the two-dimensional ΔΣ modulator, the quantization errors -Q(x,y) are diffused (noise-shaped) in an area at higher spatial frequencies with respect to both of the horizontal direction (x-direction) and the vertical direction (y-direction). As a result, as shown in Fig. 5B, a good quality image compared to those in the random dither method and the ordered dither method can be obtained as an image after gradation conversion.

Note that, regarding a method of performing gradation conversion into a good quality image by the two-dimensional ΔΣ modulator, details thereof are disclosed in Japanese Patent No. 3959698, for example.

SUMMARY OF THE INVENTION

As described above, according to the two-dimensional ΔΣ modulator, gradation conversion into a good quality image can be performed.

However, the two-dimensional ΔΣ modulator has the two-dimensional filter 34 as shown in Fig. 5A, and it is necessary for the two-dimensional filter 34 to use a line memory that stores the quantization errors output by the calculation part 33 in the past for filtering.

That is, interest is attracted to a certain pixel (x,y) as a pixel of interest (x,y), in the two-dimensional filter 34, filtering of the quantization error -Q(x,y) of the pixel of interest (x,y) is performed using the quantization errors that have been already obtained with respect to the plural pixels located near the pixel of interest (x,y) on the same horizontal line (the yth line) as that of the pixel of interest (x,y) and the plural pixels located near the pixel of interest (x,y) on horizontal lines (e.g., the (y-1)th line, the (y-2)th line, and so on) above the pixel of interest (x,y).

Therefore, in the two-dimensional filter 34, it is necessary to hold the quantization errors of the pixels on the horizontal lines other than the yth line in addition to the quantization errors of the pixels on the same yth line as the pixel of interest (x,y), and for the purpose, a line memory for plural horizontal lines is necessary.

As described above, in the two-dimensional filter 34, the line memories for plural horizontal lines are necessary, and the gradation conversion device in Fig. 5A formed as the two-dimensional $\Delta\Sigma$ modulator is increased in size and cost.

Thus, it is desirable that gradation conversion providing a high-quality image can be performed without using a line memory, and thereby, for example, downsizing and cost reduction of the device can be realized.

An embodiment of the invention is directed to a gradation conversion device or program which converts a gradation of an image, and includes dither means for dithering the image by adding random noise to pixel values forming the image, and one-dimensional $\Delta\Sigma$ modulation means for performing one-dimensional $\Delta\Sigma$ modulation on the dithered image, or a program allowing a computer to function as the gradation conversion device.

Another embodiment of the invention is directed to a gradation conversion method of a gradation conversion device that converts a gradation of an image, including the steps of allowing the gradation conversion device to dither the image by adding random noise to pixel values forming the image, and allowing the gradation conversion device to perform one-dimensional $\Delta\Sigma$ modulation on the dithered image.

In the above described embodiments of the invention, the image is dithered by adding random noise to pixel values forming the image, and one-dimensional $\Delta\Sigma$ modulation is performed on the dithered image.

The gradation conversion device may be an independent device or an internal block forming one apparatus.

Further, the program may be provided by transmission via a transmission medium or being recorded in a recording medium.

According to the embodiments of the invention, gradation conversion can be performed. Especially, gradation conversion providing a high quality image can be performed without using a line memory.

BRIEF DESCRIPTION OF THE DRAWINGS

Figs. 1A and 1B show an 8-bit gradation image and pixel values on a certain horizontal line in the image.

Figs. 2A and 2B show a 4-bit image obtained by dropping the last 4 bits of the 8-bit image, and pixel values on a certain horizontal line in the image.

Figs. 3A and 3B are diagrams for explanation of the random dither method.

Figs. 4A and 4B are diagrams for explanation of the ordered dither method.

Figs. 5A and 5B are diagrams for explanation of the error diffusion method.

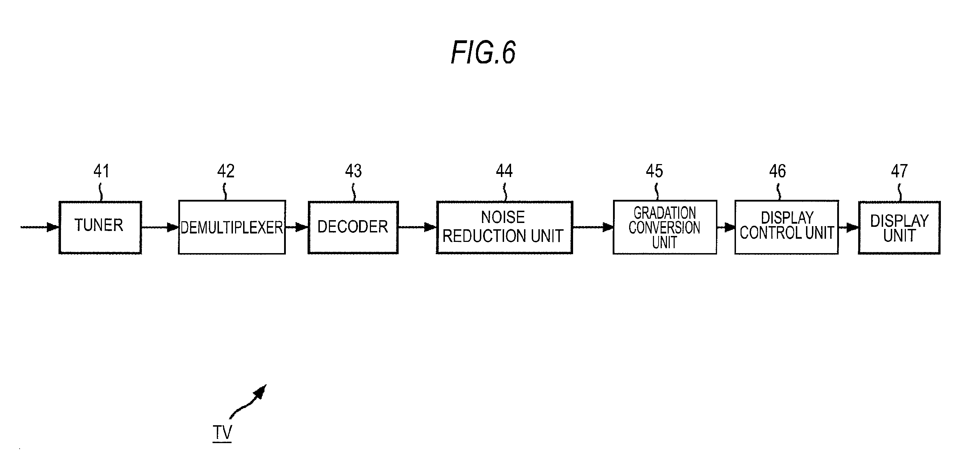

Fig. 6 is a block diagram showing a configuration example of one embodiment of a TV to which the invention is applied.

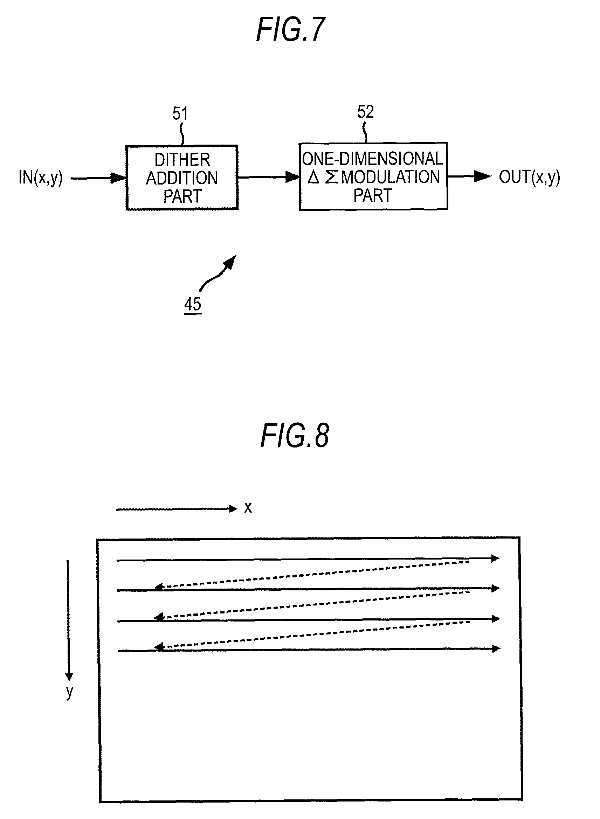

Fig. 7 is a block diagram showing a configuration example of a gradation conversion unit 45.

Fig. 8 shows a sequence of pixels (pixel values) as a target of gradation conversion processing.

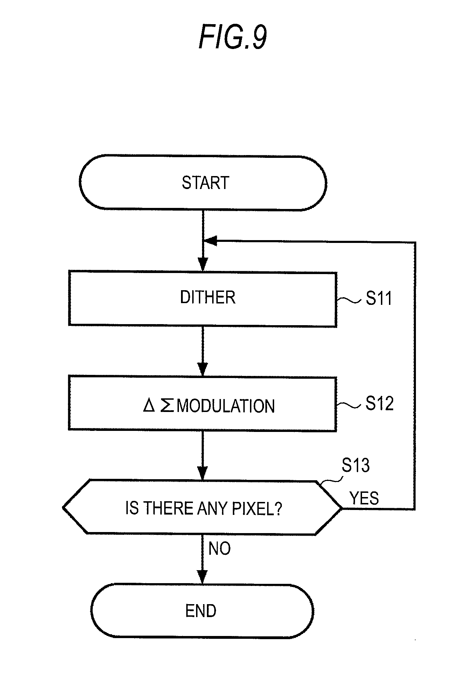

Fig. 9 is a flowchart for explanation of the gradation conversion processing.

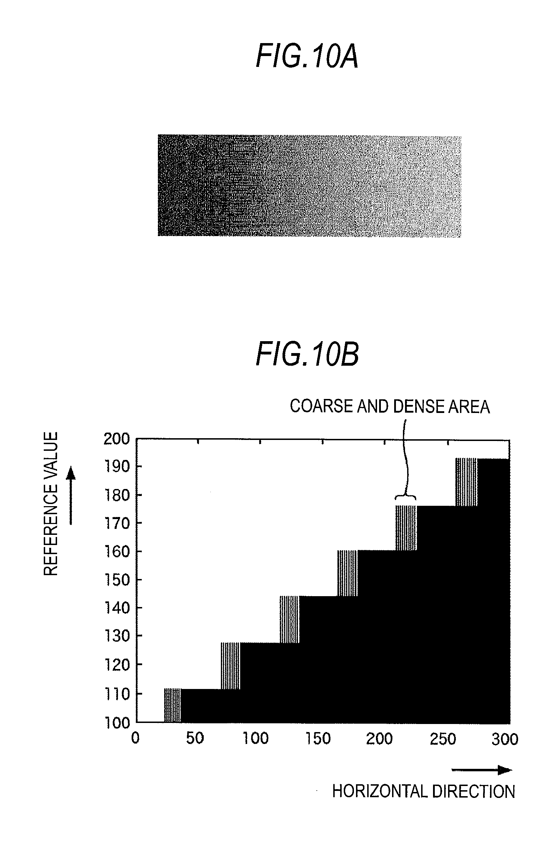

Figs. 10A and 10B show an image obtained by gradation conversion of the gradation conversion unit 45 and pixel values on a certain horizontal line in the image.

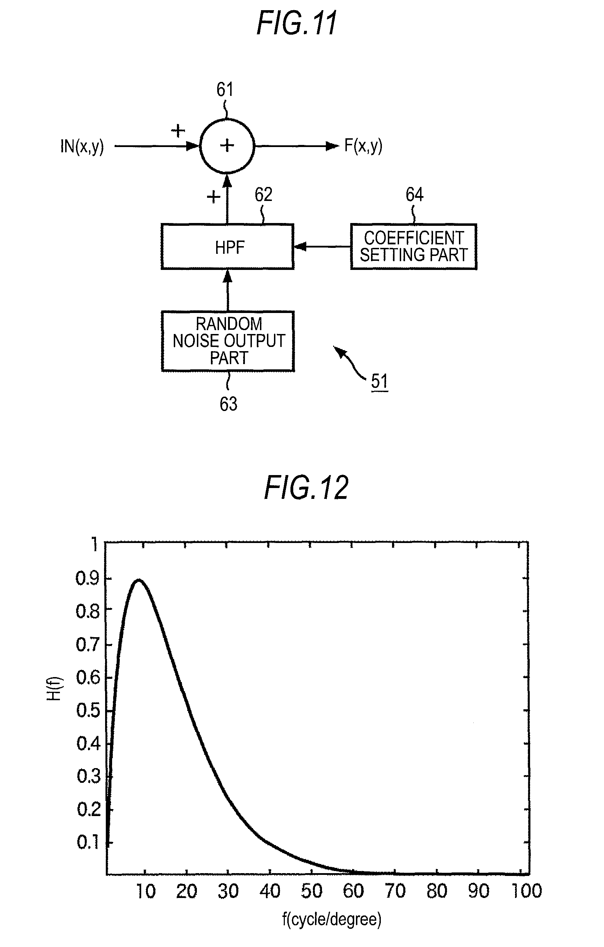

Fig. 11 is a block diagram showing a configuration example of a dither addition part 51.

Fig. 12 shows a spatial frequency characteristic of the visual sense of human.

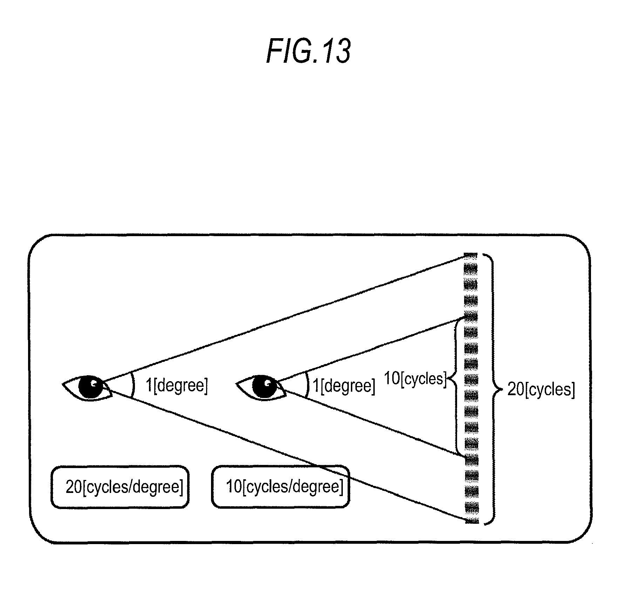

Fig. 13 is a diagram for explanation of the unit cycle/degree of the spatial frequency.

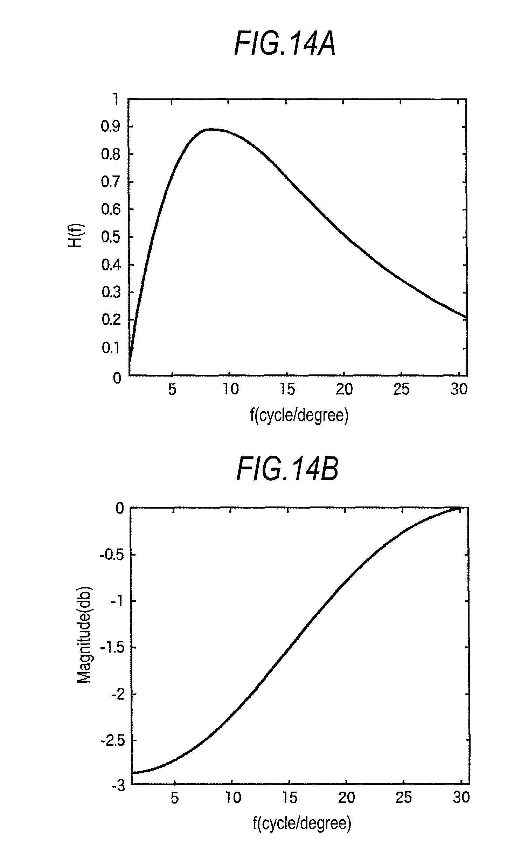

Figs. 14A and 14B are diagrams for explanation of a method of determining a filter coefficient of an HPF 62 by a coefficient setting part 64.

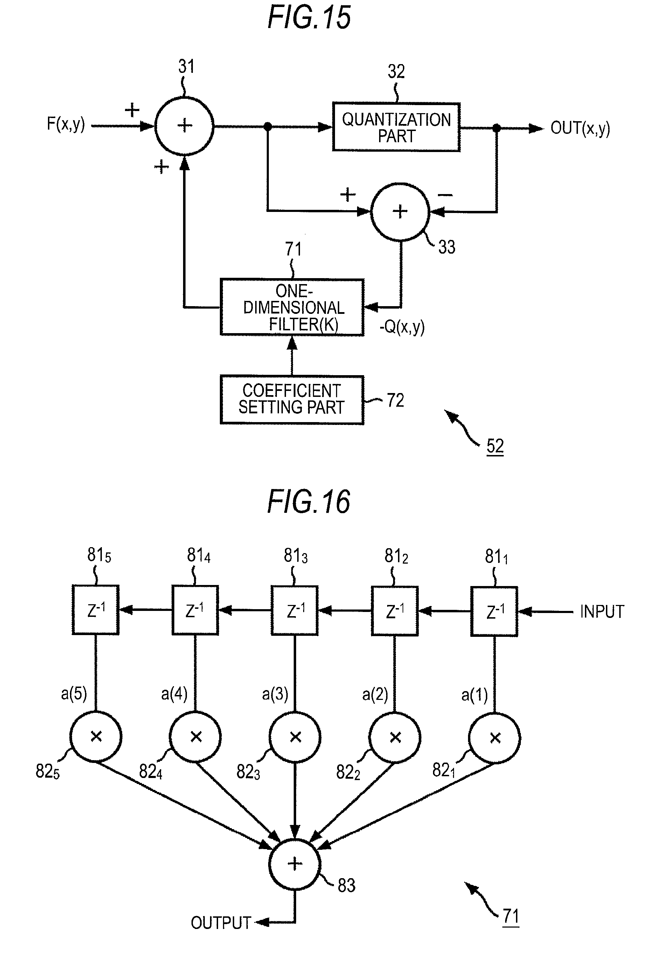

Fig. 15 is a block diagram showing a configuration example of a one-dimensional $\Delta\Sigma$ modulation part 52.

Fig. 16 is a block diagram showing a configuration example of a one-dimensional filter.

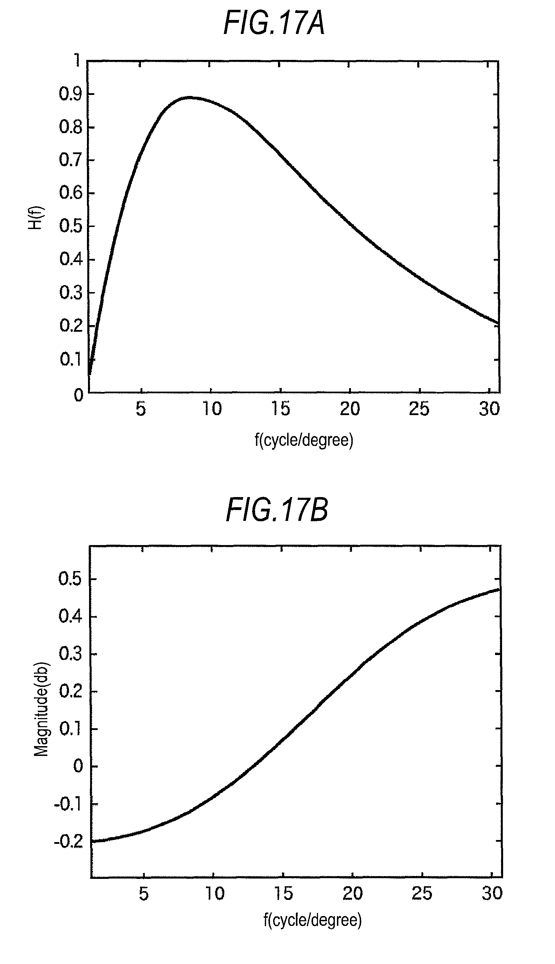

Figs. 17A and 17B are diagrams for explanation of a method of determining a filter coefficient of the one-dimensional filter 71 performed in a coefficient setting part 72.

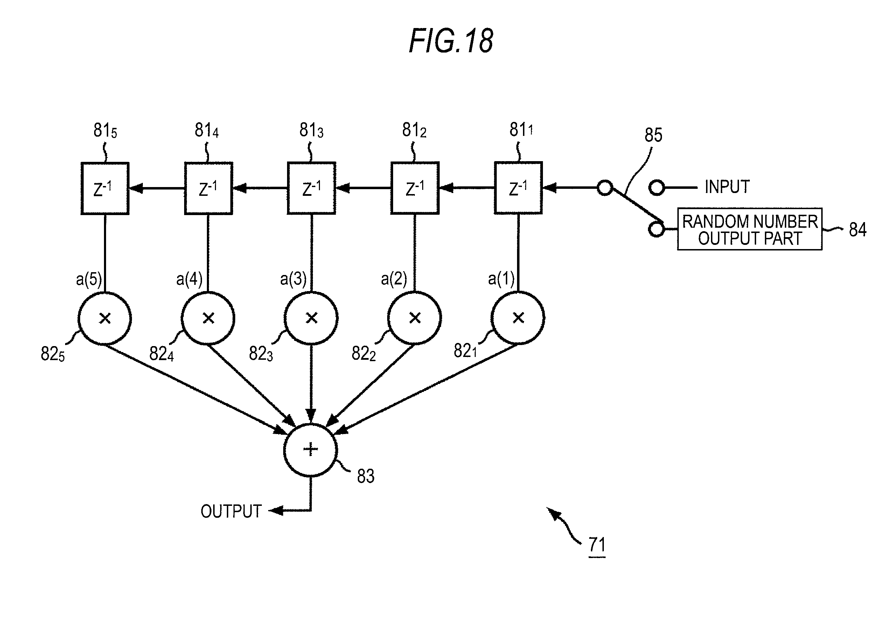

Fig. 18 is a block diagram showing another configuration example of the one-dimensional filter 71.

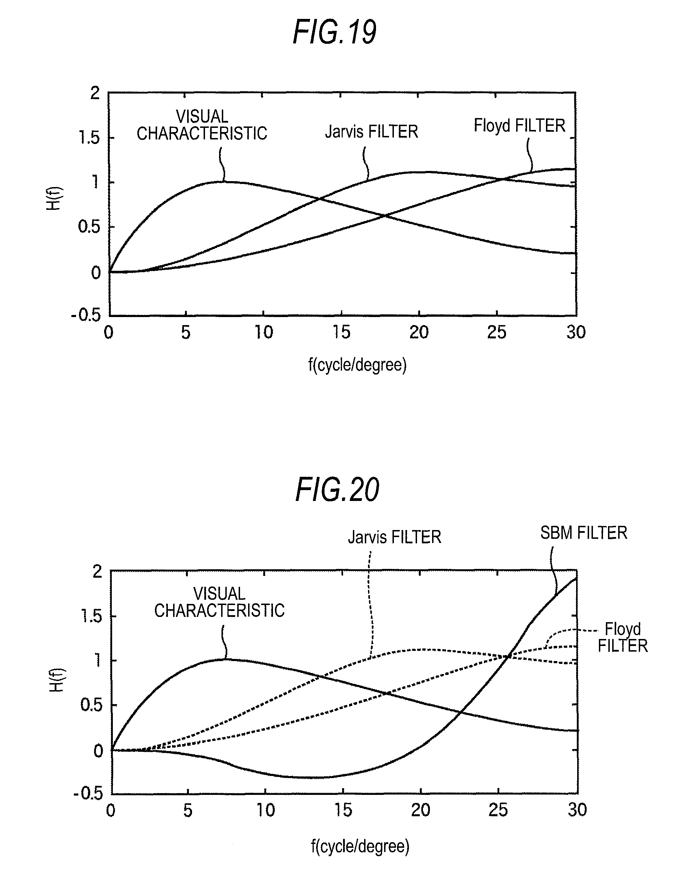

Fig. 19 shows an amplitude characteristic of noise shaping using a Floyd filter and an amplitude characteristic of noise shaping using a Jarvis filter.

Fig. 20 shows an amplitude characteristic of noise shaping using an SBM filter.

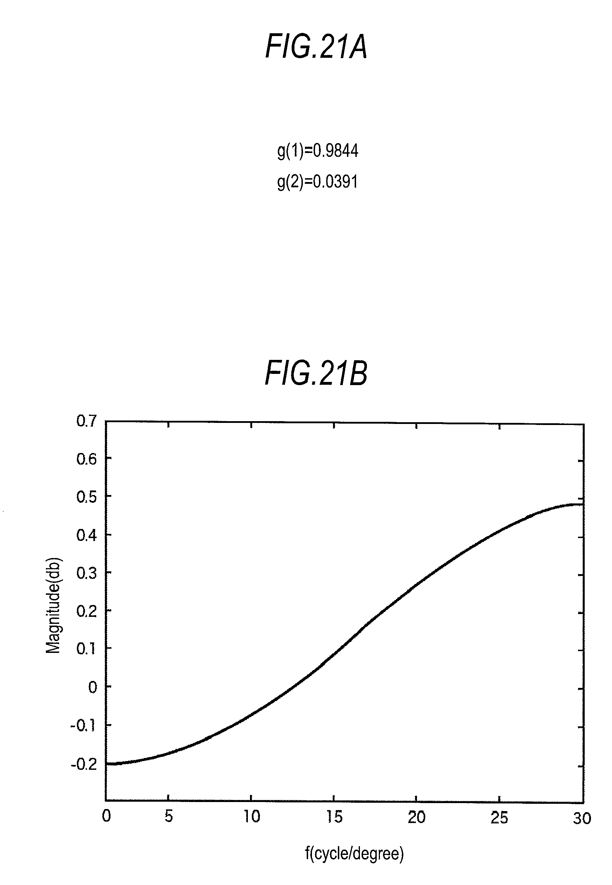

Figs. 21A and 21B show a first example of an amplitude characteristic of noise shaping and filter coefficients of the one-dimensional filter 71.

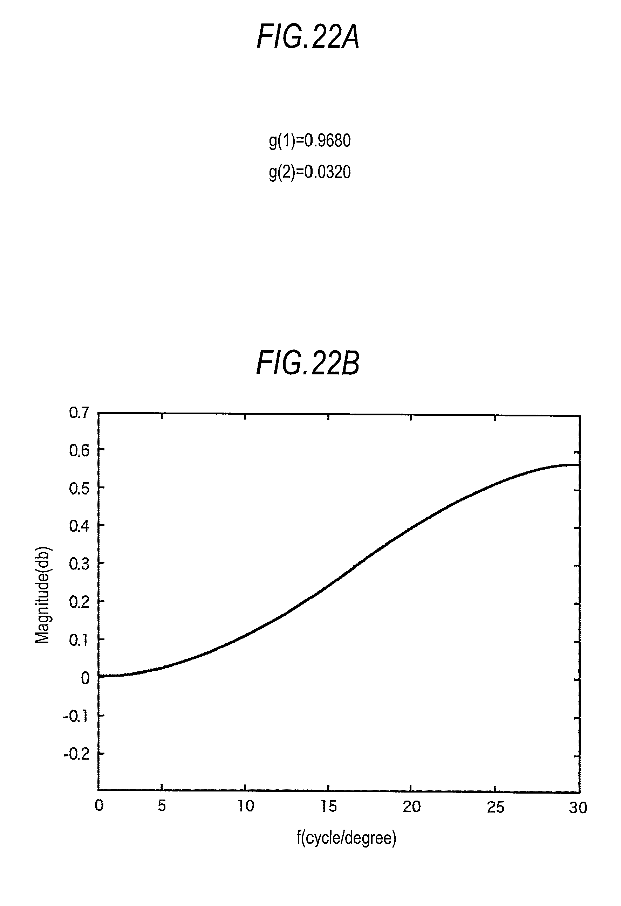

Figs. 22A and 22B show a second example of an amplitude characteristic of noise shaping and filter coefficients of the one-dimensional filter 71.

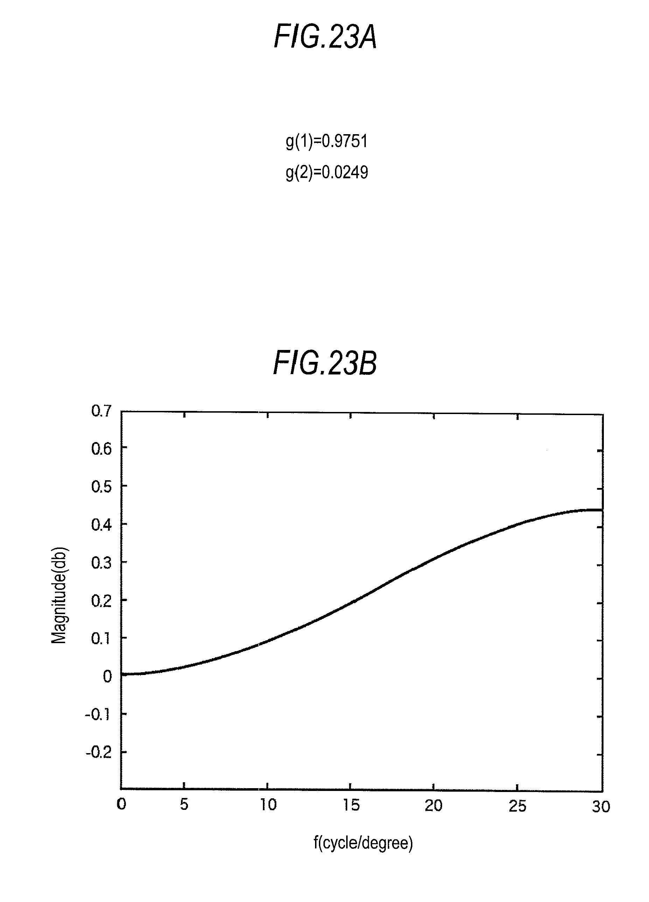

Figs. 23A and 23B show a third example of an amplitude characteristic of noise shaping and filter coefficients of the one-dimensional filter 71.

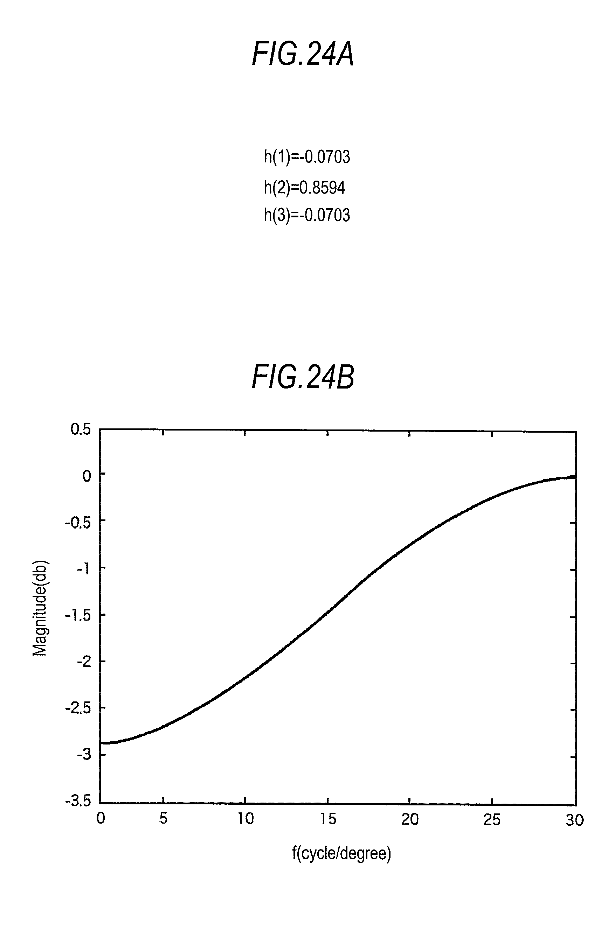

Figs. 24A and 24B show a first example of an amplitude characteristic of the HPF 62 and filter coefficients of the HPF 62.

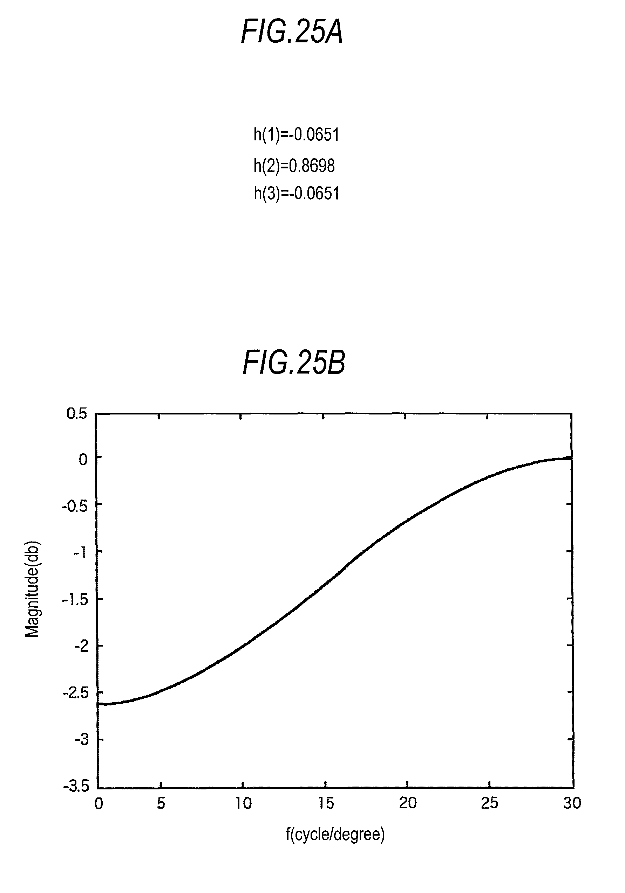

Figs. 25A and 25B show a second example of an amplitude characteristic of the HPF 62 and filter coefficients of the HPF 62.

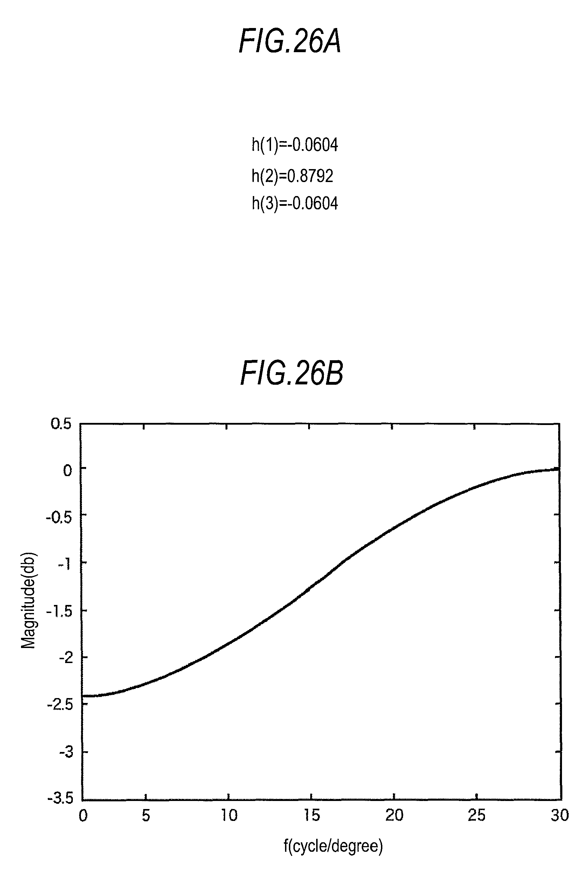

Figs. 26A and 26B show a third example of an amplitude characteristic of the HPF 62 and filter coefficients of the HPF 62.

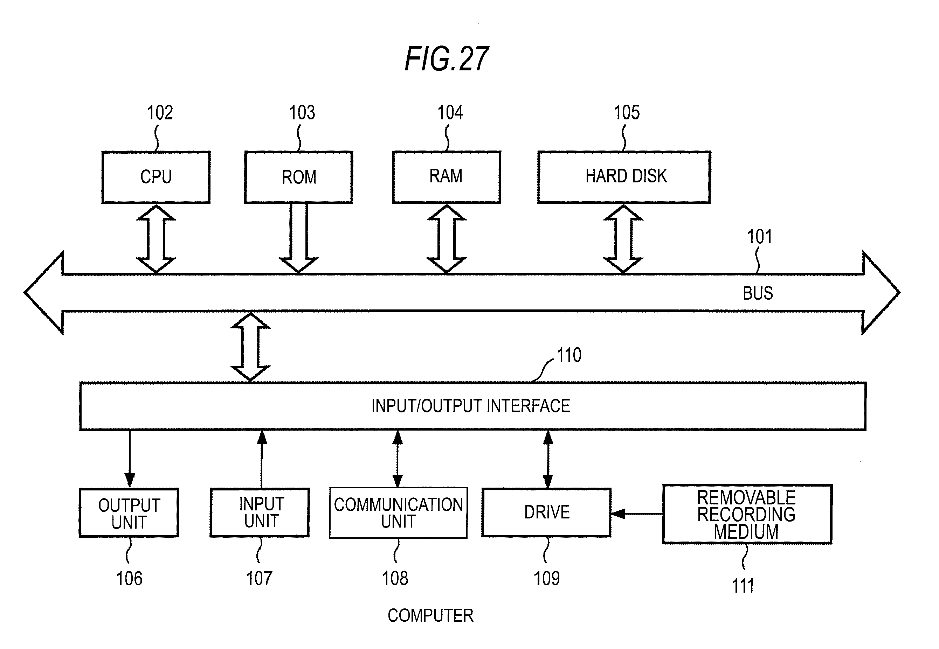

Fig. 27 is a block diagram showing a configuration example of one embodiment of a computer to which the invention is applied.

DESCRIPTION OF PREFERRED EMBODIMENTS

Fig. 6 is a block diagram showing a configuration example of one embodiment of a TV (television receiver) to which the invention is applied.

In Fig. 6, the TV includes a tuner 41, a demultiplexer 42, a decoder 43, a noise reduction unit 44, a gradation conversion unit 45, a display control unit 46, and a display unit 47.

The tuner 41 receives broadcast signals of digital broadcasting, for example, and demodulates the broadcast signals into a transport stream and supplies it to the demultiplexer 42.

The demultiplexer 42 separates a necessary TS (Transport Stream) packet from the transport stream from the tuner 41 and supplies it to the decoder 43.

The decoder 43 decodes MPEG (Moving Picture Expert Group)-encoded data contained in the TS packet from the demultiplexer 42, and thereby, obtains an 8-bit image (data), for example, and supplies it to the noise reduction unit 44.

The noise reduction unit 44 performs noise reduction processing on an 8-bit image from the decoder 43 and supplies a resulting 12-bit image, for example, to the gradation conversion unit 45.

That is, according to the noise reduction processing by the noise reduction unit 44, the 8-bit image is extended to the 12-bit image.

The gradation conversion unit 45 performs gradation conversion of converting the 12-bit image supplied from the noise reduction unit 44 into an image in a bit number that can be displayed by the display unit 47.

That is, the gradation conversion unit 45 acquires necessary information on the bit number of the image that can be displayed by the display unit 47 etc. from the display control unit 46.

If the bit number of the image that can be displayed by the display unit 47 is 8 bits, for example, the gradation conversion unit 45 performs gradation conversion of converting the 12-bit image supplied from the noise reduction unit 44 into an 8-bit image and supplies it to the display control unit 46.

The display control unit 46 controls the display unit 47 and allows the display unit 47 to display the image from the gradation conversion unit 45.

The display unit 47 includes an LCD (Liquid Crystal Display), organic EL (organic Electro Luminescence), or the like, for example, and displays the image under the control of the display control unit 46.

Fig. 7 shows a configuration example of the gradation conversion unit 45 in Fig. 6.

In Fig. 7, the gradation conversion unit 45 includes a dither addition part 51 and a one-dimensional $\Delta\Sigma$ modulation part 52, and performs the gradation conversion on the image from the noise reduction unit 44 (Fig. 6) and supplies it to the display control unit 46 (Fig. 6).

That is, to the dither addition part 51, the image from the noise reduction unit 44 (Fig. 6) is supplied as a target image of gradation conversion (hereinafter, also referred to as "target image").

The dither addition part 51 performs dithering on the target image by adding random noise to pixel values IN(x,y) forming the target image from the noise reduction unit 44, and supplies it to the one-dimensional $\Delta\Sigma$ modulation part 52.

The one-dimensional $\Delta\Sigma$ modulation part 52 performs one-dimensional $\Delta\Sigma$ modulation on the dithered target image from the dither addition part 51, and supplies a resulting image having pixel values OUT(x,y) as an image after gradation conversion to the display control unit 46 (Fig. 6).

Fig. 8 shows the sequence of the pixels (pixel values) as a target of gradation conversion processing in the gradation conversion unit 45 in Fig. 7.

From the noise reduction unit 44 (Fig. 6) to the gradation conversion unit 45, for example, as shown in Fig. 8, the pixel values IN(x,y) of the pixels (x,y) of the target image are supplied in the sequence of raster scan, and therefore, in the gradation conversion unit 45, the pixel values IN(x,y) of the pixels (x,y) of the target image are subjected to gradation conversion in the sequence of raster scan.

Next, referring to Fig. 9, the gradation conversion processing performed in the gradation conversion unit 45 in Fig. 8 will be explained.

In the gradation conversion processing, the dither addition part 51 waits for the supply of the pixel values IN (x,y) of the pixels (x,y) of the target image from the noise reduction unit 44 (Fig. 6), performs dithering of adding random noise on the pixel values IN(x,y) at step S11, and supplies them to the one-dimensional $\Delta\Sigma$ modulation part 52. The process moves to step S12.

At step S12, the one-dimensional $\Delta\Sigma$ modulation part 52 performs one-dimensional $\Delta\Sigma$ modulation on the dithered pixel values from the dither addition part 51 and supplies resulting pixel values OUT(x,y) as pixel values of the image after gradation conversion to the display control unit 46 (Fig. 6). The process moves to step S13.

At step S13, the gradation conversion unit 45 determines whether there are pixel values IN(x,y) supplied from the noise reduction unit 44 or not, if the unit determines there are, the process returns to step S11 and the same processing is repeated.

Further, at step S13, if the unit determines there are not pixel values IN(x,y) supplied from the noise reduction unit 44, the gradation conversion processing ends.

Figs. 10A and 10B show an image obtained by gradation conversion of the gradation conversion unit 45 and pixel values on a certain horizontal line in the image.

That is, Fig. 10A shows a 4-bit image (image after gradation conversion) resulted from the gradation conversion of the gradation conversion unit 45 on the 8-bit image in Fig. 1A as a target image, and Fig. 10B shows the pixel values on the certain horizontal line in the 4-bit image after gradation conversion.

8 bits can represent 256 levels while 4 bits can represent only 16 levels. However, in the 4-bit image after gradation conversion by the gradation conversion unit 45, coarse and dense areas having coarse and dense distributions of pixels having pixel values of a certain quantization value Q and pixels having pixel values of a quantization value (Q+1) one larger than the quantization value Q (or a quantization value (Q-1) one smaller than the quantization value Q), i.e., areas with a larger ratio of pixels having pixel values of the quantization value Q and areas with a larger ratio of pixels having pixel values of the quantization value (Q+1) (areas with a smaller ratio of pixels having pixel values of the quantization value (Q+1) and areas with a smaller ratio of pixels having pixel values of the quantization value Q) are produced, and the pixel values of the coarse and dense areas seem to smoothly change because of the integration effect of the visual sense of human.

As a result, although 4 bits can represent only 16 levels, in the 4-bit image after gradation conversion by the gradation conversion unit 45, pseudo representation of 256 levels can be realized as if the image were the 8-bit target image before gradation conversion.

Next, Fig. 11 shows a configuration example of the dither addition part 51 in Fig. 7.

In Fig. 11, the dither addition part 51 includes a calculation part 61, an HPF (High Pass Filter) 62, a random noise output part 63, and a coefficient setting part 64.

To the calculation part 61, the pixel values IN(x,y) of the target image from the noise reduction unit 44 (Fig. 6) are supplied in the sequence of raster scan as has been described in Fig. 8. Further, to the calculation part 61, output of the HPF 62 is supplied.

The calculation part 61 adds the output of the HPF 62 to the pixel values IN(x,y) of the target image, and supplies the resulting additional values as dithered pixel values F(x,y) to the one-dimensional $\Delta\Sigma$ modulation part 52 (Fig. 7).

The HPF 62 filters the random noise output by the random noise output part 63 based on a filter coefficient set by the coefficient setting part 64, and supplies the high-frequency component of the random noise obtained as a result of filtering to the calculation part 61.

The random noise output part 63 generates random noise according to a Gaussian distribution or the like, for example, and outputs it to the HPF 62.

The coefficient setting part 64 determines the filter coefficient of the HPF 62 based on the spatial frequency characteristic of the visual sense of human and the resolution of the display unit 47 (Fig. 6) and sets it in the HPF 62.

That is, the coefficient setting part 64 stores the spatial frequency characteristic of the visual sense of human. Further, the coefficient setting part 64 acquires the resolution of the display unit 47 from the display control unit 46 (Fig. 6). Then, the coefficient setting part 64 determines the filter coefficient of the HPF 62 in a manner as will be described below from the spatial frequency characteristic of the visual sense of human and the resolution of the display unit 47, and sets it in the HPF 62.

Note that the coefficient setting part 64 adjusts the filter coefficient of the HPF 62 in response to the operation of a user or the like. Thereby, the user can adjust the image quality of the image after gradation conversion in the gradation conversion unit 45 to desired image quality.

In the dither addition part 51 having the above described configuration, the coefficient setting part 64 determines the filter coefficient of the HPF 62 from the spatial frequency characteristic of the visual sense of human and the resolution of the display unit 47, and sets it in the HPF 62.

Then, the HPF 62 performs product-sum operation of the filter coefficient set by the coefficient setting part 64 and the random noise output by the random noise output part 63 or the like, and thereby, filters the random noise output by the random noise output part 63 and supplies the high-frequency component of the random noise to the calculation part 61.

The calculation part 61 adds the 12-bit pixel values IN(x,y) of the target image from the noise reduction unit 44 (Fig. 6) and the high-frequency component of the random noise from the HPF 62, and supplies resulting 12-bit additional values with the same bit number as that of the target image (or additional values with the larger bit number) as dithered pixel values F(x,y) to the one-dimensional $\Delta\Sigma$ modulation part 52 (Fig. 7).

Next, a method of determining the filter coefficient of the HPF 62 based on the spatial frequency characteristic of the visual sense of human and resolution of the display unit 47 performed in the coefficient setting part 64 will be explained referring to Figs. 12 to 14B.

Fig. 12 shows the spatial frequency characteristic of the visual sense of human.

In Fig. 12, the horizontal axis indicates the spatial frequency and the vertical axis indicates the sensitivity of the visual sense of human.

As shown in Fig. 12, the sensitivity of the visual sense of human steeply rises as the spatial frequency increases from 0 cycle/degree to higher, becomes the maximum around 9 cycles/degree, and then, becomes lower as the frequency becomes higher.

Here, Fig. 13 is a diagram for explanation of the unit cycle/degree of the spatial frequency.

cycle/degree expresses the number of stripes seen in a range of a unit angle of a viewing angle, For example, 10 cycles/degree expresses that 10 pairs of white lines and black lines are seen in the range of the viewing angle of one degree and 20 cycles/degree expresses that 20 pairs of white lines and black lines are seen in the range of the viewing angle of one degree.

Since the image after gradation conversion by the gradation conversion unit 45 is finally displayed on the display unit 47 (Fig. 6), in view of improvement of the image quality of the image displayed on the display unit 47, only (from 0 cycle/degree) to the highest spatial frequency of the image displayed on the display unit 47 may be enough to be considered with respect to the spatial frequency characteristic of the visual sense of human.

Accordingly, the coefficient setting part 64 (Fig. 11) determines the filter coefficient of the HPF 62 based on the characteristic equal to or less than the spatial frequency corresponding to the resolution of the display unit 47 among the spatial frequency characteristics of the visual sense of human.

That is, the highest spatial frequency of the image displayed on the display unit 47 can be obtained in the spatial frequency in units of cycle/degree from a distance from a viewer to the display unit 47 (hereinafter, also referred to as "viewing distance") when the image displayed on the display unit 47 is viewed.

If the (longitudinal) length in the vertical direction of the display unit 47 is expressed by H inches, about 2.5H to 3.0H of the viewing distance is employed, for example.

For instance, when the display unit 47 has a display screen in a size of 40 inches of lateral and longitudinal pixels of 1920 x 1080 for display of a so-called full-HD (High Definition) image, the highest spatial frequency of the image displayed on the display unit 47 is about 30 cycles/degree.

Here, the highest spatial frequency of the image displayed on the display unit 47 is determined by the resolution of the display unit 47, and also appropriately referred to as "spatial frequency corresponding to resolution".

Figs. 14A and 14B show a method of determining the filter coefficient of the HPF 62 based on the characteristic equal to or less than the spatial frequency characteristic corresponding to the resolution of the display unit 47 among the spatial frequency characteristics of the visual sense of human by the coefficient setting part 64 (Fig. 11).

That is, Fig. 14A shows the characteristic equal to or less than the spatial frequency to the resolution of the display unit 47 among the spatial frequency characteristics of the visual sense of human.

Here, Fig. 14A shows, assuming that the spatial frequency to the resolution of the display unit 47 is 30 cycles/ degree, for example, the characteristic equal to or less than 30 cycles/degree among the spatial frequency characteristics of the visual sense of human shown in Fig. 12.

The coefficient setting part 64 determines the filter coefficient of the HPF 62 based on the spatial frequency characteristic of the visual sense of human in Fig. 14A so that the characteristic at high frequencies of the amplitude characteristics of the HPF 62 may be a characteristic opposite to the spatial frequency characteristic of the visual sense of human in Fig. 14A (the characteristic depicting the shape of vertical inversion of the spatial frequency characteristic of the visual sense).

That is, Fig. 14B shows the amplitude characteristic of the HPF 62 having the filter coefficient determined in the above described manner.

The amplitude characteristic in Fig. 14B has the maximum gain (e.g., 0 db) at 30 cycles/degree as the spatial frequency corresponding to the resolution of the display unit 47, and the characteristic at high frequencies is the characteristic of the HPF as the characteristic opposite to the spatial frequency characteristic of the visual sense of human in Fig. 14A (hereinafter, also appropriately referred to as "opposite characteristic").

Therefore, in the HPF 62 (Fig. 11) having the amplitude characteristic in Fig. 14B, more of the higher frequency components at which the sensitivity of the visual sense of human is lower of the random noise from the random noise output part 63 pass and the frequency components corresponding to around 9 cycles/degree at which the sensitivity of the visual sense of human is higher and less than 9 cycles/degree are cut.

As a result, in the calculation part 61 (Fig. 11), to the pixel values IN(x,y) of the target image, the frequency components at which the sensitivity of the visual sense of human is higher of the random noise is (hardly) added but more of the higher frequency components at which the sensitivity of the visual sense of human is lower are added. Accordingly, in the image after gradation conversion by the gradation conversion unit 45, visual recognition of noise can be prevented and visual image quality can be improved.

Note that, the amplitude characteristic of the HPF 62 at the high frequencies does not necessarily completely match the characteristic opposite to the visual sense of human. That is, the amplitude characteristic of the HPF 62 at the high frequencies may be enough to be similar to the characteristic opposite to the visual sense of human.

Further, as the filter that filters the random noise output by the random noise output part 63 (hereinafter, also referred to as "noise filter"), in place of the HPF 62, a filter having a whole amplitude characteristic that is inverse of the spatial frequency characteristic of the visual sense of human in Fig. 14A may be employed.

That is, according to the spatial frequency characteristic of the visual sense of human in Fig. 14A, as frequency components at which the sensitivity of the visual sense of human is lower, there are not only the high-frequency components but also the frequency components at the low frequencies around 0 cycle/degree. As the noise filter, a bandpass filter that passes the high- and low-frequency components of the random noise output by the random noise output part 63 may be employed.

Note that, when the bandpass filter is employed as the noise filter, the number of taps of the noise filter becomes greater and the device is increased in size and cost.

Further, according to a simulation performed by the inventors of the invention, even when the above described bandpass filter is employed as the noise filter, compared to the case of employing the HPF 62, no significant improvement is recognized in the image quality of the image after gradation conversion.

Furthermore, when the above described bandpass filter is employed as the noise filter, not only the high-frequency components but also the low-frequency components are added to the pixel values IN(x,y) of the target image. As a result, in some cases, in the coarse and dense areas described in Figs. 10A and 10B, parts in which many of pixels having pixel values of the quantization value Q or pixels having pixel values of the quantization value (Q+1) continue are produced, and consequently, unnatural lines may appear in the image after gradation conversion.

Therefore, in view of the size and cost of the device and also in view of the image quality of the image after gradation conversion, it is desirable that the HPF 62 having the amplitude characteristic at high frequencies of the characteristic opposite to the visual sense of human as shown in Fig. 14B is employed.

Next, Fig. 15 shows a configuration example of the one-dimensional ΔΣ modulation part 52 in Fig. 7.

In the drawing, the same signs are assigned to the parts corresponding to those in the gradation conversion devices as the two-dimensional ΔΣ modulator in Fig. 5A.

In Fig. 15, the one-dimensional ΔΣ modulation part 52 includes a calculation part 31, a quantization part 32, a calculation part 33, a one-dimensional filter 71, and a coefficient setting part 72.

To the calculation part 31, the pixel values F(x,y) of the dithered target image are supplied from the dither addition part 51 (Fig. 7) in the sequence of raster scan. Further, to the calculation part 31, output of the one-dimensional filter 71 is supplied.

The calculation part 31 adds the pixel values F(x,y) from the dither addition part 51 and the output of the one-dimensional filter 71, and supplies the resulting additional values to the quantization part 32 and the calculation part 33.

The quantization part 32 quantizes the additional values from the calculation part 31 into 8 bits as the bit number of the image to be displayed on the display unit 47 (Fig. 6), and supplies the resulting 8-bit quantization values (quantization values containing quantization errors -Q(x,y)) as the pixel values OUT(x,y) of the pixels (x,y) of the image after gradation conversion to the calculation part 33 and the display control unit 46 (Fig. 6).

Here, the one-dimensional ΔΣ modulation part 52 acquires the bit number of the image to be displayed by the display unit 47 from the display control unit 46 and controls the quantization part 32 to perform quantization into the quantization values in the bit number.

The calculation part 33 obtains quantization errors -Q(x,y) produced by the quantization in the quantization part 32 by subtracting the pixel values OUT(x,y) from the quantization part 32 from the additional values from the calculation part 31, that is, subtracting the output from the quantization part 32 from the input to the quantization part 32, and supplies them to the one-dimensional filter 71.

The one-dimensional filter 71 is a one-dimensional filter that filters signals, and filters the quantization errors -Q(x,y) from the calculation part 33 and outputs the filtering results to the calculation part 31.

Here, in the calculation part 31, the filtering results of the quantization errors -Q(x,y) output by the one-dimensional filter 71 and the pixel values IN(x,y) are added in the above described manner.

The coefficient setting part 72 determines the filter coefficient of the one-dimensional filter 71 based on the spatial frequency characteristic of the visual sense of human and the resolution of the display unit 47 (Fig. 6) and sets it in the one-dimensional filter 71.

That is, the coefficient setting part 72 stores the spatial frequency characteristic of the visual sense of human. Further, the coefficient setting part 72 acquires the resolution of the display unit 47 from the display control unit 46 (Fig. 6). Then, the coefficient setting part 72 determines the filter coefficient of the one-dimensional filter 71 from the spatial frequency characteristic of the visual sense of human and the resolution of the display unit 47 in a manner described as below and sets it in the one-dimensional filter 71.

Note that the coefficient setting part 72 adjusts the filter coefficient of the one-dimensional filter 71 in response to user operation or the like. Thereby, the user can adjust the image quality of the image after gradation conversion in the gradation conversion unit 45 to desired image quality.

In the one-dimensional $\Delta\Sigma$ modulation part 52 having the above described configuration, the coefficient setting part 72 determines the filter coefficient of the one-dimensional filter 71 from the spatial frequency characteristic of the visual sense of human and the resolution of the display unit 47 and sets it in the one-dimensional filter 71.

Then, the one-dimensional filter 71 performs product-sum operation of the filter coefficient set by the coefficient setting part 72 and the quantization errors -Q(x,y) output by the calculation part 33 or the like, and thereby, filters the quantization errors -Q(x,y) output by the calculation part 33 and supplies the high-frequency component of the quantization errors -Q(x,y) to the calculation part 31.

The calculation part 31 adds the pixel values F(x,y) from the dither addition part 51 and the output of the one-dimensional filter 71, and supplies the resulting additional values to the quantization part 32 and the calculation part 33.

The quantization part 32 quantizes the additional values from the calculation part 31 into 8 bits as the bit number of the image to be displayed on the display unit 47 (Fig. 6), and supplies the resulting 8-bit quantization values as the pixel values OUT(x,y) of the pixels (x,y) of the image after gradation conversion to the calculation part 33 and the display control unit 46 (Fig. 6).

The calculation part 33 obtains quantization errors -Q(x,y) contained in the pixel values OUT(x,y) the quantization part 32 by subtracting the pixel values OUT(x,y) from the quantization part 32 from the additional values from the calculation part 31, and supplies them to the one-dimensional filter 71.

The one-dimensional filter 71 filters the quantization errors -Q(x,y) from the calculation part 33 and outputs the filtering results to the calculation part 31. In the calculation part 31, the filtering results of the quantization errors -Q(x,y) output by the one-dimensional filter 71 and the pixel values IN(x,y) are added in the above described manner.

In the one-dimensional $\Delta\Sigma$ modulation part 52, the quantization errors -Q(x,y) are fed back to the input side (calculation part 31) via the one-dimensional filter 71, and thereby, the one-dimensional $\Delta\Sigma$ modulation is performed. Therefore, in the one-dimensional $\Delta\Sigma$ modulation part 52, the one-dimensional $\Delta\Sigma$ modulation is performed on the pixel values F(x,y) from the dither addition part 51, and the pixel values OUT(x,y) are output as results of the one-dimensional $\Delta\Sigma$ modulation.

In the one-dimensional $\Delta\Sigma$ modulation part 52 in Fig. 15, the quantization errors -Q(x,y) are quantization errors corresponding to the pixel values F(x,y). To obtain the pixel values OUT(x,y) obtained by $\Delta\Sigma$ modulation of the pixel values F(x,y), the quantization errors -Q(x,y) for the pixel values F(x,y) are not used but the quantization errors for the pixel values before the pixel values F(x,y) (pixel values processed before) are used in the sequence of raster scan.

That is, in the calculation part 31, the filtering results of the one-dimensional filter 71 using the quantization errors respectively corresponding to pixel values F(x-1,y), F(x-2,y), F(x-3,y), F(x-4,y), F(x-5,y) of five pixels, for example, which have been processed immediately before the pixel values F(x,y), are added to the pixel values F(x,y).

Next, Fig. 16 shows a configuration example of the one-dimensional filter 71 in Fig. 15.

In Fig. 16, the one-dimensional filter 71 includes delay parts $81_1$ to $81_5$, multiplication parts $82_1$ to $82_5$, and an addition part 83, and forms an FIR (Finite Impulse Response) filter with five taps.

That is, to the delay part $81_i$ (i = 1, 2, 3, 4, 5), stored values of the delay part $81_{i-1}$ at the upstream are input. The delay part $81_i$ temporarily stores the input there, delays the input by a time for one pixel, and outputs it to the delay part $81_{i+1}$ at the downstream and the multiplication parts $82_i$.

To the delay part $81_1$ at the most upstream, the quantization errors -Q(x,y) from the calculation part 33 (Fig. 15) are supplied, and the delay part $81_1$ stores the quantization errors -Q(x,y) and delays.

Further, the delay part $81_5$ at the most downstream outputs the delayed input to the multiplication parts $82_5$ only.

The multiplication part $82_i$ multiplies the output of the delay part $81_i$ by a filter coefficient a(i) and supplies a resulting multiplication value to the addition part 83.

The addition part 83 adds the multiplication values from the respective multiplication parts $82_1$ to $82_5$, and supplies a resulting additional value as a result of filtering of the quantization errors -Q(x,y) to the calculation part 31 (Fig. 15).

As described above, it is necessary for the one-dimensional filter 71 to have delay parts $81_i$ that store quantization errors of some (five in Fig. 16) pixels on one horizontal line, however, it is not necessary to provide the line memory necessary for the two-dimensional filter 34 in Fig. 5A.

Therefore, according to the one-dimensional $\Delta\Sigma$ modulation part 52 including such a one-dimensional filter 71, compared to the two-dimensional ΔΣ modulation part in Fig. 5A, downsizing and cost reduction of the device can be realized.

Next, referring to Figs. 17A and 17B, a method of determining the filter coefficient of the one-dimensional filter 71 based on the spatial frequency characteristic of the visual sense of human and the resolution of the display unit 47 performed by the coefficient setting part 72 in Fig. 15 will be explained.

Now, if the additional values output by the calculation part 31 are expressed by U(x,y) in the one-dimensional ΔΣ modulation part 52 in Fig. 15, the following equations (1) and (2) hold in the one-dimensional ΔΣ modulation part 52.

$$-Q(x,y) = U(x,y) - OUT(x,y) \; ...(1)$$

$$U(x,y) = F(x,y) + K \times (-Q(x,y)) \; ...(2)$$

By substituting equation (2) into equation (1) and eliminating U(x,y), equation (3) is obtained.

$$OUT(x,y) = F(x,y) + (1-K) \times Q(x,y) \; ...(3)$$

Here, in equation (3), K represents a transfer function of the one-dimensional filter 71.

In ΔΣ modulation, noise shaping of, as it were, pushing the quantization errors toward the high frequencies is performed. In equation (3), the quantization errors Q(x,y) are modulated by (1-K), and the modulation is noise shaping.

Therefore, the amplification characteristic of the noise shaping in the ΔΣ modulation of the one-dimensional ΔΣ modulation part 52 is determined by the property of the one-dimensional filter 71, i.e., the filter coefficient of the one-dimensional filter 71.

Here, as described in Fig. 12, the sensitivity of the visual sense of human steeply becomes the maximum around 9 cycles/degree, and then, becomes lower as the frequency becomes higher.

On the other hand, since the image of the gradation conversion by the gradation conversion unit 45 is finally displayed on the display unit 47 (Fig. 6), in view of the improvement of the image quality of the image displayed on the display unit 47, only to the spatial frequency corresponding to the resolution of the display unit 47, i.e., the highest spatial frequency of the image displayed on the display unit 47 may be enough to be considered with respect to the spatial frequency characteristic of the visual sense of human.

Accordingly, the coefficient setting part 72 (Fig. 15) determines the filter coefficient of the one-dimensional filter 71 based on the characteristic equal to or less than the spatial frequency corresponding to the resolution of the display unit 47 among the spatial frequency characteristics of the visual sense of human.

Figs. 17A and 17B are diagrams for explanation of the method of determining the filter coefficient of the one-dimensional filter 71 based on the characteristic equal to or less than the spatial frequency corresponding to the resolution of the display unit 47 among the spatial frequency characteristics of the visual sense of human by the coefficient setting part 72 (Fig. 15).

That is, Fig. 17A shows the characteristic equal to or less than the spatial frequency corresponding to the resolution of the display unit 47 among the spatial frequency characteristics of the visual sense of human.

Here, Fig. 17A shows, assuming that the spatial frequency corresponding to the resolution of the display unit 47 is 30 cycles/degree, for example, the characteristic equal to or less than 30 cycles/degree among the spatial frequency characteristics of the visual sense of human shown in Fig. 12. Therefore, Fig. 17A is the same diagram as Fig. 14A described above.

The coefficient setting part 72 determines the filter coefficient of the one-dimensional filter 71 based on the spatial frequency characteristic of the visual sense of human in Fig. 17A so that the characteristic at high frequencies of the amplitude characteristics of the noise shaping determined by the characteristic of the one-dimensional filter 71 may be the characteristic opposite to the spatial frequency characteristic of the visual sense of human in Fig. 17A.

That is, Fig. 17B shows the amplitude characteristic of the noise shaping determined by the characteristic of the one-dimensional filter 71 having the filter coefficient determined in the above described manner.

The amplitude characteristic in Fig. 17B has the maximum gain at 30 cycles/degree as the spatial frequency corresponding to the resolution of the display unit 47, and the characteristic at high frequencies is the characteristic of the HPF as the characteristic opposite to the visual sense of human in Fig. 17A.

Therefore, according to the noise shaping having the amplitude characteristic in Fig. 17B, the higher frequency components at which the sensitivity of the visual sense of human is lower of the quantization errors contained in the pixel values OUT(x,y) of the image after gradation conversion become larger and the frequency components corresponding to around 9 cycles/degree at which the sensitivity of the visual sense of human is higher and less than 9 cycles/degree become smaller.

As a result, in the image after gradation conversion by the gradation conversion unit 45, visual recognition of noise can be prevented and visual image quality can be improved.

Note that, the amplitude characteristic of the noise shaping at high frequencies does not necessarily completely match the characteristic opposite to the visual sense of human as is the case of the HPF 62 (Fig. 11) described in Fig. 14B. That is, the amplitude characteristic of the noise shaping at high frequencies may be enough to be similar to the characteristic opposite to the visual sense of human.

Further, the whole amplitude characteristic of the noise shaping at high frequencies may be the characteristic opposite to the spatial frequency characteristic of the visual sense of human in Fig. 17A as is the case of the HPF 62 described in Fig. 14B. Note that, as is the case of the HPF 62 described in Fig. 14B, in view of the size and cost of the device and also in view of the image quality of the image after gradation conversion, it is desirable that the characteristic of the HPF having the amplitude characteristic at high frequencies of the characteristic opposite to the visual sense of human as shown in Fig. 17B is employed as the amplitude characteristic of the noise shaping.

Here, the one-dimensional filter 71 that determines the amplitude characteristic of the noise shaping has five delay parts $81_1$ to $81_5$, as shown in Fig. 16, for example, and therefore, in the one-dimensional filter 71, the values to be added to the pixel values F(x,y) of the pixels (x,y) supplied to the calculation part 31 are obtained using the quantization errors for the pixel values of the five pixels processed immediately before the pixels (x,y) (hereinafter, also referred to as immediately preceding processed pixels).

If the immediately preceding processed pixels are pixels on the horizontal line on which the pixels (x,y) are, generally, the pixel (x,y) may be correlated with the immediately preceding processed pixels. However, if the immediately preceding processed pixels are on a horizontal line different from that on which the pixels (x,y) are, i.e., if the pixels (x,y) are pixels at the head of the horizontal line, it may be possible that there is no correlativity between the pixels (x,y) and all of the immediately preceding processed pixels.

Since it is apparently not preferable that the values to be added to the pixel values F(x,y) of the pixels (x,y) are obtained using the quantization errors for the pixel values of the immediately preceding processed pixels not correlated with the pixels (x,y) in the one-dimensional filter 71, it is considered that the stored values of the five delay parts $81_1$ to $81_5$ of the one-dimensional filter 71 are initialized to a fixed value of zero or the like, for example, in the horizontal flyback period (and vertical flyback section) of the (dithered) image supplied from the dither addition part 51 (Fig. 7) to the calculation part 31.

However, according a simulation performed by the inventors of the invention, it is confirmed that the image (image after gradation conversion) with better image quality can be obtained in the case where the stored values of the delay parts $81_1$ to $81_5$ of the one-dimensional filter 71 are not initialized but stored without change in the delay parts $81_1$ to $81_5$ in the horizontal flyback period than in the case of initialization to the fixed value.

Therefore, in the one-dimensional filter 71, it is desirable that, in the horizontal flyback period of the dithered image, the stored values of the delay parts $81_i$ are not initialized but stored in the delay parts $81_i$ without change.

Note that it is considered that the image with better image quality can be obtained in the case where the stored values of the delay parts $81_i$ are not initialized to the fixed value but stored without change because the diffusivity of the quantization errors becomes better than in the case of initialization to the fixed value.

Therefore, in view of improvement in the diffusivity of the quantization errors, in the one-dimensional filter 71, not only that the stored values of the delay parts $81_i$ are not initialized in the horizontal flyback period but also the stored values of the delay parts $81_i$ may be initialized by random numbers.

That is, Fig. 18 shows another configuration example of the one-dimensional filter 71 in Fig. 15.

In the drawing, the same signs are assigned to the parts corresponding to those in the case of Fig. 16, and the description thereof will be appropriately omitted as below.

In Fig. 18, the one-dimensional filter 71 has the same configuration as that in the case of Fig. 16 except that a random number output part 84 and a switch 85 are newly provided.

The random number output part 84 generates and outputs random numbers that can be taken as quantization errors -Q(x,y) obtained by the calculation part 33 (Fig. 15).

The switch 85 selects the output of the random number output part 84 in the horizontal flyback period (and vertical flyback period), and selects the quantization errors -Q(x,y) from the calculation part 33 (Fig. 15) and supplies them to the delay part $81_1$ in other periods.

In the one-dimensional filter 71 in Fig. 18, in periods other than the horizontal flyback period, the switch 85 selects the quantization errors -Q(x,y) from the calculation part 33 and supplies them to the delay part $81_1$, and thereby, the same filtering as that in the case of Fig. 16 is performed.

On the other hand, in the period of the horizontal flyback period, the switch 85 selects the output of the random number output part 84 and the random number output part 84 sequentially supplies five random numbers to the delay part $81_1$. Thereby, (5-i+1)th random number is stored in the delay part $81_i$, and, regarding the pixels at the head of the horizontal line after the horizontal flyback period ends, in the horizontal flyback period, the output of the one-dimensional filter 71 as the values to be added in the calculation part 31 (Fig. 15) are obtained using the random numbers stored in the delay parts $81_1$ to $81_5$.

Note that, in the horizontal flyback period, the output from the one-dimensional filter 71 to the calculation part 31 is not performed.

As described above, in the gradation conversion unit 45 (Fig. 7), random noise is added to the pixel values forming the image and the image is dithered in the dither addition part 51, one-dimensional $\Delta\Sigma$ modulation is performed on the dithered image in the one-dimensional $\Delta\Sigma$ modulation part 52, and thereby, gradation conversion can be performed without using a line memory and high quality image can be obtained as the image after gradation conversion.

Therefore, the gradation conversion that provides the high quality image can be performed without using a line memory, and downsizing and cost reduction of the device can be realized.

That is, since the gradation conversion is performed without using a line memory, not the two-dimensional $\Delta\Sigma$ modulation, but the one-dimensional $\Delta\Sigma$ modulation is performed in the gradation conversion unit 45.

Since the one-dimensional $\Delta\Sigma$ modulation is performed on the pixel values supplied in the sequence of raster scan in the one-dimensional $\Delta\Sigma$ modulation part 52 in the image after one-dimensional $\Delta\Sigma$ modulation, the effect of $\Delta\Sigma$ modulation (effect of noise shaping) is produced in the horizontal direction but the effect of $\Delta\Sigma$ modulation is not produced in the vertical direction.

Accordingly, only by the one-dimensional $\Delta\Sigma$ modulation, apparent gray levels are poor with respect to the vertical direction of the image after one-dimensional $\Delta\Sigma$ modulation, and quantization noise (quantization errors) is highly visible.

On this account, dither is performed before one-dimensional $\Delta\Sigma$ modulation in the gradation conversion unit 45. As a result, in the image after gradation conversion by the gradation conversion unit 45, the effect of dithering is produced in the vertical direction, the effect of one-dimensional $\Delta\Sigma$ modulation is produced in the horizontal direction, and thereby, apparent image quality can be improved with respect to both the horizontal directions and vertical direction.

Further, in the gradation conversion unit 45, the high-frequency components of the random noise obtained by filtering the random noise with the HPF 62 are used for dithering. Furthermore, the filter coefficient of the HPF 62 is determined based on the characteristic equal to or less than the spatial frequency corresponding to the resolution of the display unit 47 (Fig. 6) among the spatial frequency characteristics of the visual sense of human so that the characteristic at high frequencies of the amplitude characteristics of the HPF 62 may be the characteristic opposite to the spatial frequency characteristic of the visual sense of human.

Therefore, the frequency components of noise used for dithering are frequency components at which the sensitivity of the visual sense of human is lower, and the apparent image quality of the image after gradation conversion can be improved.

Further, in the gradation conversion unit 45, the filter coefficient of the one-dimensional filter 71 (Fig. 15) is determined based on the characteristic equal to or less than the spatial frequency corresponding to the resolution of the display unit 47 among the spatial frequency characteristics of the visual sense of human so that the characteristic at high frequencies of the amplitude characteristics of the noise shaping of the quantization errors may be the characteristic opposite to the spatial frequency characteristic of the visual sense of human.

Therefore, the frequency components of quantization errors are frequency components at which the sensitivity of the visual sense of human is lower, and the apparent image quality of the image after gradation conversion can be improved.

Note that the dither addition part 51 (Fig. 11) can be formed without the HPF 62 (and the coefficient setting part 64) provided, and, in this case, the size of the device can be made smaller. In this case, the apparent image quality of the image after gradation conversion becomes lower compared to the case where the HPF 62 is provided.

Further, if the image as a target image of gradation conversion (target image) in the gradation conversion unit 45 has plural components of Y, Cb, Cr, etc. as pixel values, the gradation conversion processing is performed independently with respect to each component. That is, if the target image has a Y-component, a Cb-component, and a Cr-component as the pixel values, the gradation conversion processing is performed only on the Y-component. In the same manner, the gradation conversion processing is performed only on the Cb-component, and the gradation conversion processing is performed only on the Cr-component.

As above, the case where the invention is applied to gradation conversion in a TV has been described, however, the embodiment of the invention can be applied to any device that handles images other than those of the TV.

That is, for example, in HDMI(R) (High-Definition Multimedia Interface) that has rapidly spread recently, Deep Color that transmits not only 8-bit pixel values but also 10-bit or 12-bit pixel values are specified, and the gradation conversion processing by the gradation conversion unit 45 can apply the images having 10-bit or 12-bit pixel values transmitted via the HDMI to gradation conversion when the images are displayed on a display that displays 8-bit images or the like.

Further, for example, in the case where a video device that reproduces a disc such as a Blu-ray (R) disc or the like reproduces a 12-bit image, for example, when images are displayed on a display that displays 8-bit images from the video device via a transmission path for transmitting 8-bit images, gradation conversion processing by the gradation conversion unit 45 is performed in the video device, 12-bit images are converted into 8-bit images and transmitted to the display, and thereby, pseudo display of the 12-bit images can be performed on the display.

Next, the amplitude characteristic of the HPF 62 (Fig. 11) and the amplitude characteristic of noise shaping using the one-dimensional filter 71 (Fig. 15) will be further explained later, but first, the error diffusion method in related art, i.e., the two-dimensional $\Delta\Sigma$ modulation in related art will be described.

Fig. 19 shows amplitude characteristics of noise shaping by the two-dimensional $\Delta\Sigma$ modulation in related art.

As the two-dimensional filter 34 in Fig. 5A used for noise shaping by the two-dimensional $\Delta\Sigma$ modulation in related art, there are a Jarvis, Judice & Ninke filter (hereinafter, also referred to as "Jarvis filter") and a Floyd & Steinberg filter (hereinafter, also referred to as "Floyd filter").

Fig. 19 shows the amplitude characteristic of noise shaping using the Jarvis filter and the amplitude characteristic of noise shaping using the Floyd filter.

Here, in Fig. 19, the spatial frequency corresponding to the resolution of the display unit 47 (Fig. 6) (the highest spatial frequency of the image that can be displayed on the display unit 47) is set to about 30 cycles/degree like in the cases of Figs. 14B and 17B.

Further, Fig. 19 also shows the spatial frequency characteristic of the visual sense of human (hereinafter, also referred to as "visual characteristic") in addition to the amplitude characteristics of noise shaping.

The vertical axes (gain) of the amplitude characteristic of the HPF 62 in Fig. 14B and the amplitude characteristic of noise shaping using the one-dimensional $\Delta\Sigma$ modulation in Fig. 17B are expressed by db (decibel), however, the vertical axis of the amplitude characteristic in Fig. 19 is linearly expressed. The expression is the same in Fig. 20 described as below.

Further, the Jarvis filter is a two-dimensional filter, and there are spatial frequencies in two directions of the horizontal direction and the vertical direction as (the axes of) the spatial frequency of the amplitude characteristic of noise shaping using the Jarvis filter. In Fig. 19 (the same in Fig. 20), the spatial frequency in one direction of the two directions is the horizontal axis. The expression is the same for the spatial frequency of the amplitude characteristic of noise shaping using the Floyd filter.

If the spatial frequency corresponding to the resolution of the display unit 47 takes an extremely high value of about 120 cycles/degree, for example, noise (quantization errors) is sufficiently modulated in the frequency band in which the sensitivity of the visual sense of human is lower with the Jarvis filter or the Floyd filter.

Note that, if the spatial frequency corresponding to the resolution of the display unit 47 takes about 30 cycles/degree, for example, it is difficult to sufficiently modulate noise in the high frequency band in which the sensitivity of the visual sense of human is lower with the Jarvis filter or the Floyd filter.

In this case, noise is highly visible and apparent image quality is deteriorated in the image after gradation conversion.

In order to reduce the deterioration of the apparent image quality because the noise is highly visible in the image after gradation conversion, it is necessary to set the amplitude characteristic of noise shaping as shown in Fig. 20, for example.

That is, Fig. 20 shows an example of the amplitude characteristic of noise shaping for reducing the deterioration of the apparent image quality because the noise is highly visible in the image after gradation conversion (hereinafter, also referred to as "deterioration reducing noise shaping").

Here, a filter for noise shaping used for $\Delta\Sigma$ modulation that realizes deterioration reducing noise shaping (a filter corresponding to the two-dimensional filter 34 in Fig. 5A and the one-dimensional filter 71 in Fig. 15) is also called an SBM (Super Bit Mapping) filter.

Fig. 20 shows the visual characteristic, the amplitude characteristic of noise shaping using the Jarvis filter, and the amplitude characteristic of noise shaping using the Floyd filter shown in Fig. 19 in addition to the amplitude characteristic of deterioration reducing noise shaping (noise shaping using the SBM filter).

In the amplitude characteristic of deterioration reducing noise shaping, the characteristic at high frequencies is the characteristic opposite to the visual characteristic like the amplitude characteristic of the HPF 62 in Fig. 14B and the amplitude characteristic of noise shaping in Fig. 17B.

Furthermore, the amplitude characteristic of deterioration reducing noise shaping increases at high frequencies more rapidly than the amplitude characteristic of noise shaping using the Jarvis filter or the Floyd filter.

Thereby, in the deterioration reducing noise shaping, noise (quantization errors) is modulated toward the higher frequencies at which the sensitivity of the visual sense of human is lower than in the noise shaping using the Jarvis filter or the Floyd filter.

By determining the filter coefficient of the one-dimensional filter 71 so that the amplitude characteristic of noise shaping using the one-dimensional filter 71 in Fig. 15 may be the characteristic opposite to the visual characteristic at high frequencies and may increase more rapidly than the amplitude characteristic of noise shaping by $\Delta\Sigma$ modulation using the Floyd filter or the Jarvis filter like the amplitude characteristic of noise shaping (deterioration reducing noise shaping) using the SBM filter, in the calculation part 31 in Fig. 15, noise (quantization errors) at high frequencies at which visual sensitivity is lower is added to the pixel values F(x,y), and, as a result, the noise (quantization errors) can be prevented from being highly visible in the image after gradation conversion.

Similarly, by determining the filter coefficient of the HPF 62 so that the amplitude characteristic of noise shaping using the HPF 62 in Fig. 11 may be the characteristic opposite to the visual characteristic at high frequencies and may increase more rapidly than the amplitude characteristic of noise shaping by $\Delta\Sigma$ modulation using the Floyd filter or the Jarvis filter like the amplitude characteristic of noise shaping using the SBM filter, in the calculation part 61 in Fig. 11, noise at high frequencies at which visual sensitivity is lower is added, and, as a result, the noise (quantization errors) can be prevented from being highly visible in the image after gradation conversion.

Figs. 21A to 23B show examples of amplitude characteristics of noise shaping by $\Delta\Sigma$ modulation in the one-dimensional $\Delta\Sigma$ modulation part 52 in Fig. 15 and filter coefficients of the one-dimensional filter 71 when the highest spatial frequency of the image that can be displayed on the display unit 47 (Fig. 6) is set to 30 cycles/degree.

Here, in Figs. 21A to 23B (the same in Figs. 24A to 26B, which will be described later), the vertical axis of the amplitude characteristic is expressed by dB.

Further, in Figs. 21A to 23B, an FIR filter with two taps is employed as the one-dimensional filter 71, and g(1) and g(2) express two filter coefficients of the FIR filter with two taps.

The filter coefficient g(1) corresponds to the filter coefficient a(1) of the one-dimensional filter 71 with five taps shown in Fig. 16, and multiplied by the quantization error of the pixel on the immediate left of the pixel of interest. Further, the filter coefficient g(2) corresponds to the filter coefficient a(2) of the one-dimensional filter 71 with five taps shown in Fig. 16, and multiplied by the quantization error of the pixel on the left of the immediate left of the pixel of interest.

Figs. 21A and 21B show a first example of an amplitude characteristic of noise shaping by $\Delta\Sigma$ modulation in the one-dimensional $\Delta\Sigma$ modulation part 52 in Fig. 15 and filter coefficients of the one-dimensional filter 71 when the highest spatial frequency of the image that can be displayed on the display unit 47 (Fig. 6) is set to 30 cycles/degree.

That is, Fig. 21A shows the first example of filter coefficients of the one-dimensional filter 71 (Fig. 15) with two taps determined so that the amplitude characteristic of noise shaping by $\Delta\Sigma$ modulation in the one-dimensional $\Delta\Sigma$ modulation part 52 may increase at high frequencies more rapidly than the amplitude characteristic of noise shaping by $\Delta\Sigma$ modulation using the Floyd filter or the Jarvis filter.

In Fig. 21A, as the filter coefficients of the one-dimensional filter 71 with two taps, g(1) = 0.9844 and g(2) = 0.0391 are employed.

Fig. 21B shows the amplitude characteristic of noise shaping by $\Delta\Sigma$ modulation in the one-dimensional $\Delta\Sigma$ modulation part 52 when the filter coefficients of the one-dimensional filter 71 are as shown in Fig. 21A.

In the amplitude characteristic of noise shaping of Fig. 21B, the gain increases at high frequencies more rapidly than the amplitude characteristic of noise shaping by $\Delta\Sigma$ modulation using the Floyd filter or the Jarvis filter.

Figs. 22A and 22B show a second example of an amplitude characteristic of noise shaping by $\Delta\Sigma$ modulation in the one-dimensional $\Delta\Sigma$ modulation part 52 in Fig. 15 and filter coefficients of the one-dimensional filter 71 when the highest spatial frequency of the image that can be displayed on the display unit 47 (Fig. 6) is set to 30 cycles/degree.

That is, Fig. 22A shows the second example of filter coefficients of the one-dimensional filter 71 (Fig. 15) with two taps determined so that the amplitude characteristic of noise shaping by $\Delta\Sigma$ modulation in the one-dimensional $\Delta\Sigma$ modulation part 52 may increase at high frequencies more rapidly than the amplitude characteristic of noise shaping by $\Delta\Sigma$ modulation using the Floyd filter or the Jarvis filter.

In Fig. 22A, as the filter coefficients of the one-dimensional filter 71 with two taps, g(1) = 0.9680 and g(2) = 0.0320 are employed.

Fig. 22B shows the amplitude characteristic of noise shaping by $\Delta\Sigma$ modulation in the one-dimensional $\Delta\Sigma$ modulation part 52 when the filter coefficients of the one-dimensional filter 71 are as shown in Fig. 22A.

In the amplitude characteristic of noise shaping of Fig. 22B, the gain increases at high frequencies more rapidly than the amplitude characteristic of noise shaping by $\Delta\Sigma$ modulation using the Floyd filter or the Jarvis filter.

Figs. 23A and 23B show a third example of an amplitude characteristic of noise shaping by $\Delta\Sigma$ modulation in the one-dimensional $\Delta\Sigma$ modulation part 52 in Fig. 15 and filter coefficients of the one-dimensional filter 71 when the highest spatial frequency of the image that can be displayed on the display unit 47 (Fig. 6) is set to 30 cycles/degree.

That is, Fig. 23A shows the third example of filter coefficients of the one-dimensional filter 71 (Fig. 15) with two taps determined so that the amplitude characteristic of noise shaping by $\Delta\Sigma$ modulation in the one-dimensional $\Delta\Sigma$ modulation part 52 may increase at high frequencies more rapidly than the amplitude characteristic of noise shaping by $\Delta\Sigma$ modulation using the Floyd filter or the Jarvis filter.

In Fig. 23A, as the filter coefficients of the one-dimensional filter 71 with two taps, g(1) = 0.9751 and g(2) = 0.0249 are employed.

Fig. 23B shows the amplitude characteristic of noise shaping by ΔΣ modulation in the one-dimensional ΔΣ modulation part 52 when the filter coefficients of the one-dimensional filter 71 are as shown in Fig. 23A.

In the amplitude characteristic of noise shaping of Fig. 23B, the gain increases at high frequencies more rapidly than the amplitude characteristic of noise shaping by ΔΣ modulation using the Floyd filter or the Jarvis filter.

Figs. 24A to Fig. 26B show examples of amplitude characteristics and filter coefficients of the HPF 62 in Fig. 11 when the highest spatial frequency of the image that can be displayed on the display unit 47 (Fig. 6) is set to 30 cycles/degree.

Here, in Figs. 24A to 26B, an FIR filter with three taps is employed as the HPF 62, and h(1), h(2), and h(3) express three filter coefficients of the FIR filter with three taps.

The filter coefficients h(1), h(2), and h(3) are multiplied by three continuous values of noise in the FIR filter with three taps as the HPF.

Figs. 24A and 24B show a first example of an amplitude characteristic of the HPF 62 in Fig. 11 and filter coefficients of the HPF 62 when the highest spatial frequency of the image that can be displayed on the display unit 47 (Fig. 6) is set to 30 cycles/degree.

That is, Fig. 24A shows the first example of filter coefficients of the HPF 62 (Fig. 11) with three taps determined so that the amplitude characteristic of the HPF 62 may increase at high frequencies more rapidly than the amplitude characteristic of noise shaping by ΔΣ modulation using the Floyd filter or the Jarvis filter.

In Fig. 24A, as the filter coefficients of the HPF 62 with three taps, h(1) = h(3) = -0.0703, h(2) = 0.8594 are employed.

Fig. 24B shows the amplitude characteristic of the HPF 62 when the filter coefficients of the HPF 62 are as shown in Fig. 24A.

In the amplitude characteristic of noise shaping of Fig. 24B, the gain increases at high frequencies more rapidly than the amplitude characteristic of noise shaping by ΔΣ modulation using the Floyd filter or the Jarvis filter.

Figs. 25A and 25B show a second example of an amplitude characteristic of the HPF 62 in Fig. 11 and filter coefficients of the HPF 62 when the highest spatial frequency of the image that can be displayed on the display unit 47 (Fig. 6) is set to 30 cycles/degree.

That is, Fig. 25A shows the second example of filter coefficients of the HPF 62 (Fig. 11) with three taps determined so that the amplitude characteristic of the HPF 62 may increase at high frequencies more rapidly than the amplitude characteristic of noise shaping by ΔΣ modulation using the Floyd filter or the Jarvis filter.

In Fig. 25A, as the filter coefficients of the HPF 62 with three taps, h(1) = h(3) = -0.0651, h(2) = 0.8698 are employed.

Fig. 25B shows the amplitude characteristic of the HPF 62 when the filter coefficients of the HPF 62 are as shown in Fig. 25A.

In the amplitude characteristic of noise shaping of Fig. 25B, the gain increases at high frequencies more rapidly than the amplitude characteristic of noise shaping by ΔΣ modulation using the Floyd filter or the Jarvis filter.

Figs. 26A and 26B show a third example of an amplitude characteristic of the HPF 62 in Fig. 11 and filter coefficients of the HPF 62 when the highest spatial frequency of the image that can be displayed on the display unit 47 (Fig. 6) is set to 30 cycles/degree.

That is, Fig. 26A shows the third example of filter coefficients of the HPF 62 (Fig. 11) with three taps determined so that the amplitude characteristic of the HPF 62 may increase at high frequencies more rapidly than the amplitude characteristic of noise shaping by ΔΣ modulation using the Floyd filter or the Jarvis filter.

In Fig. 26A, as the filter coefficients of the HPF 62 with three taps, h(1) = h(3) = -0.0604, h(2) = 0.8792 are employed.

Fig. 26B shows the amplitude characteristic of the HPF 62 when the filter coefficients of the HPF 62 are as shown in Fig. 26A.

In the amplitude characteristic of noise shaping of Fig. 26B, the gain increases at high frequencies more rapidly than the amplitude characteristic of noise shaping by ΔΣ modulation using the Floyd filter or the Jarvis filter.

Next, the above described series of processing may be performed by hardware or software. When the series of processing is performed by software, a program forming the software is installed in a general-purpose computer or the like.

Accordingly, Fig. 27 shows a configuration example of one embodiment of the computer in which the program for executing the above described series of processing is installed.

The program may be recorded in a hard disk 105 and a ROM 103 as recording media within the computer in advance.

Alternatively, the program may temporarily or permanently stored (recorded) in a removal recording medium 111 such as flexible disc, CD-ROM (Compact Disc Read Only Memory), MO (Magneto Optical) disc, DVD (Digital Versatile Disc), magnetic disc, and semiconductor memory. Such a removal recording medium 111 may be provided as a so-called packaged software.

Note that the program may be not only installed from the above described removal recording medium 111 in the computer but also installed in the hard disk 105 within the computer by wireless transfer from a download site via an artificial satellite for digital satellite broadcasting or wired transfer via a network such as LAN (Local Area Network) or the Internet to the computer, and receiving the program transferred in that way by a communication unit 108 in the computer.

The computer contains a CPU (Central Processing Unit) 102. An input/output interface 110 is connected via a bus 101 to the CPU 102, and, when a user inputs a command by operating an input unit 107 including a keyboard, a mouse, a microphone, etc. or the like, the CPU 102 executes the program stored in the ROM (Read Only Memory) 103 according to the command via the input/output interface 110. Alternatively, the CPU 102 loads in a RAM (Random Access Memory) 104 the program stored in the hard disk 105, the program transferred from the satellite or the network, received by the communication unit 108, and installed in the hard disk 105, and the program read out from the removable recording medium 111 mounted on a drive 109 and installed in the hard disk 105 and executes it. Thereby, the CPU 102 performs processing according to the above described flowchart or processing executed by the above described configuration in the block diagram. Then, the CPU 102 allows the processing result according to need to be output from an output unit 106 formed by an LCD (Liquid Crystal Display), speakers etc., or transmitted from the communication unit 108, and further recorded in the hard disk 105 via the input/output interface 110, for example.

Here, in this specification, the processing steps for describing the program for allowing the computer to execute various processing may not necessarily be processed in time sequence, but includes processing to be executed in parallel or individually (e.g., parallel processing or object-based processing).

Further, the program may be processed by one computer or distributed-processed by plural computers. Furthermore, the program may be transferred to a remote computer and executed.

The embodiments of the invention are not limited to the above described embodiments but various changes can be made without departing from the scope of the invention.

The present application contains subject matter related to that disclosed in Japanese Priority Patent Application JP 2008-247291 filed in the Japan Patent Office on September 26, 2008.

**Claims**

1. A gradation conversion device that converts a gradation of an image, comprising:

   dither means (51) for dithering the image by adding random noise to pixel values forming the image; and
   one-dimensional $\Delta\Sigma$ modulation means (52) for performing one-dimensional $\Delta\Sigma$ modulation on the dithered image.

2. The gradation conversion device according to claim 1, wherein the dither means (51) has an HPF (High Pass Filter) (62) that filters signals, filters the random noise with the HPF, and adds a high-frequency component of the random noise resulting from the filtering to the pixel values.

3. The gradation conversion device according to claim 2, wherein a filter coefficient of the HPF (62) is determined so that a characteristic at high frequencies of an amplitude characteristic of the HPF (62) is a characteristic opposite to a spatial frequency characteristic of the visual sense of human.

4. The gradation conversion device according to claim 3, wherein the filter coefficient of the HPF (62) is determined so that the characteristic at high frequencies of the amplitude characteristic of the HPF (62) may be the characteristic opposite to the spatial frequency characteristic of the visual sense of human based on a characteristic equal to or less than a spatial frequency corresponding to resolution of display means (47) for displaying image on which the $\Delta\Sigma$ modulation has been performed among the spatial frequency characteristics of the visual sense of human.

5. The gradation conversion device according to claim 4, wherein the filter coefficient of the HPF (62) is determined so that amplitude characteristic of the HPF (62) may increase more rapidly than an amplitude characteristic of noise shaping by $\Delta\Sigma$ modulation using a Floyd filter or a Jarvis filter.

6. The gradation conversion device according to claim 4, further comprising setting means (64) for setting the filter coefficient of the HPF (62) based on the spatial frequency characteristic of the visual sense of human and the resolution of the display means (47).

7. The gradation conversion device according to claim 6, wherein the setting means (64) further adjusts the filter coefficient of the HPF (62) in response to an operation by a user.

8. The gradation conversion device according to claim 1, wherein the one-dimensional $\Delta\Sigma$ modulation means (52) has:

a one-dimensional filter (71) that filters quantization errors;
calculation means (31) for adding the pixel values of the dithered image and output of the one-dimensional filter; and
quantization means (32) for quantizing output of the calculation means (31) and outputs quantization values containing the quantization errors as a result of one-dimensional $\Delta\Sigma$ modulation,

wherein a filter coefficient of the one-dimensional filter (71) is determined so that a characteristic at high frequencies of an amplitude characteristic of noise shaping performed by the one-dimensional $\Delta\Sigma$ modulation means (52) may be a characteristic opposite to the spatial frequency characteristic of the visual sense of human.

9. The gradation conversion device according to claim 8, wherein the filter coefficient of the one-dimensional filter (71) is determined so that the characteristic at high frequencies of the amplitude characteristic of noise shaping may be the characteristic opposite to the spatial frequency characteristic of the visual sense of human based on a characteristic equal to or less than the spatial frequency corresponding to the resolution of the display means (47) for displaying the image on which the $\Delta\Sigma$ modulation has been performed among the spatial frequency characteristics of the visual sense of human.

10. The gradation conversion device according to claim 9, wherein the filter coefficient of the one-dimensional filter (71) is determined so that the characteristic at high frequencies of the amplitude characteristic of noise shaping performed by the one-dimensional $\Delta\Sigma$ modulation means (52) may increase more rapidly than the amplitude characteristic of noise shaping by $\Delta\Sigma$ modulation using the Floyd filter or the Jarvis filter.

11. The gradation conversion device according to claim 8, further comprising setting means (72) for setting the filter coefficient of the one-dimensional filter (71) based on the spatial frequency characteristic of the visual sense of human and the resolution of the display means (47).

12. The gradation conversion device according to claim 11, wherein the setting means (72) further adjusts the filter coefficient of the one-dimensional filter (71) in response to an operation by the user.

13. The gradation conversion device according to claim 8, wherein the one-dimensional filter (71) has:

plural delay means $(81_1\text{-}81_5)$ for storing input and delaying;
multiplication means $(82_1\text{-}82_5)$ for multiplying output of the plural delay means $(81_1\text{-}81_5)$ by the filter coefficient,

wherein the stored values of the delay means $(81_1\text{-}81_5)$ are not initialized but stored without change in the delay means $(81_1\text{-}81_5)$ in a horizontal flyback period of the dithered image.

14. The gradation conversion device according to claim 8, wherein the one-dimensional filter (71) has:

plural delay means $(81_1\text{-}81_5)$ for storing and delaying input;
multiplication means $(82_1\text{-}82_5)$ for multiplying output of the plural delay means $(81_1\text{-}81_5)$ by the filter coefficient,

wherein the stored values of the delay means $(81_1\text{-}81_5)$ are initialized by random numbers in a horizontal flyback period of the dithered image.

15. A gradation conversion method of a gradation conversion device that converts a gradation of an image, comprising the steps of:

allowing the gradation conversion device to dither the image by adding random noise to pixel values forming the image; and
allowing the gradation conversion device to perform one-dimensional $\Delta\Sigma$ modulation on the dithered image.

## FIG.1A

## FIG.1B

## FIG.2A

## FIG.2B

REFERENCE VALUE

HORIZONTAL DIRECTION

## FIG.3A

IN(x,y) $\xrightarrow{+}$ (+) $\xrightarrow{}$ QUANTIZATION PART $\xrightarrow{}$ OUT(x,y)

11

22

RANDOM NOISE OUTPUT PART

12

## FIG.3B

## FIG.4A

DITHER MATRIX

## FIG.4B

## FIG.5A

## FIG.5B

FIG.6

EP 2 169 941 A1

# FIG.7

51

DITHER
ADDITION
PART

52

ONE-DIMENSIONAL
Δ Σ MODULATION
PART

IN(x,y) → DITHER ADDITION PART → ONE-DIMENSIONAL Δ Σ MODULATION PART → OUT(x,y)

45

# FIG.8

⟶ X

y

# FIG.9

```
                    ┌─────────────────────┐
                    │        START        │
                    └─────────────────────┘
                               │
                               ▼
                    ┌─────────────────────┐
                    │       DITHER        │ ～ S11
                    └─────────────────────┘
                               │
                               ▼
                    ┌─────────────────────┐
                    │   Δ Σ MODULATION    │ ～ S12
                    └─────────────────────┘
                               │                  S13
                               ▼
                    ╱─────────────────────╲
                    ╲  IS THERE ANY PIXEL? ╱ ── YES
                    └─────────────────────┘
                               │
                              NO
                               ▼
                    ┌─────────────────────┐
                    │        END          │
                    └─────────────────────┘
```

## FIG.10A

## FIG.10B

COARSE AND DENSE AREA

REFERENCE VALUE

HORIZONTAL DIRECTION

## FIG.11

IN(x,y) $\xrightarrow{+}$ (61) $\boxed{+}$ $\longrightarrow$ F(x,y)

$\xrightarrow{+}$

62 — HPF $\longleftarrow$ 64 — COEFFICIENT SETTING PART

63 — RANDOM NOISE OUTPUT PART

51

## FIG.12

f(cycle/degree)

FIG.13

## FIG.14A

## FIG.14B

## FIG.15

## FIG.16

## FIG.17A

## FIG.17B

FIG.18

## FIG.19

## FIG.20

# FIG.21A

g(1)=0.9844

g(2)=0.0391

# FIG.21B

## FIG.22A

$$g(1)=0.9680$$
$$g(2)=0.0320$$

## FIG.22B

## FIG.23A

g(1)=0.9751

g(2)=0.0249

## FIG.23B

## FIG.24A

h(1)=-0.0703

h(2)=0.8594

h(3)=-0.0703

## FIG.24B

## FIG.25A

h(1)=-0.0651

h(2)=0.8698

h(3)=-0.0651

## FIG.25B

## FIG.26A

h(1)=-0.0604

h(2)=0.8792

h(3)=-0.0604

## FIG.26B

# FIG.27

COMPUTER

EP 2 169 941 A1

Europäisches
Patentamt

European
Patent Office

Office européen
des brevets

**EUROPEAN SEARCH REPORT**

Application Number

EP 09 17 0956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 11 088693 A (RICOH KK) 30 March 1999 (1999-03-30) ----- | | INV. H04N1/405 G09G3/20 |
| A | KITE T D ET AL: "Digital halftoning as 2-D delta-sigma modulation" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, vol. 1, 26 October 1997 (1997-10-26), pages 799-802, XP010254077 ISBN: 978-0-8186-8183-7 ----- | | |
| A | WO 01/31623 A (KONINKL PHILIPS ELECTRONICS NV [NL]) 3 May 2001 (2001-05-03) ----- | | |
| A | EP 1 583 358 A (SHARP KK [JP]) 5 October 2005 (2005-10-05) ----- | | |
| A | US 6 795 085 B1 (DOHERTY DONALD B [US] ET AL) 21 September 2004 (2004-09-21) ----- | | TECHNICAL FIELDS SEARCHED (IPC) |
| A | YAGYU M ET AL: "Fast and efficient algorithm to design noise-shaping FIR filters for high-order overload-free stable sigma-delta modulators" PROCEEDINGS - IEEE INTERNATIONAL SYMPOSIUM ON CIRCUITS AND SYSTEMS - 2004 IEEE INTERNATIONAL SYMPOSIUM ON CIRCUITS AND SYSTEMS - PROCEEDINGS; VOLUME I OF V: ANALOG SIGNAL PROCESSING 2004 INSTITUTE OF ELECTRICAL AND ELECTRONICS ENGINEERS INC. US,, 23 May 2004 (2004-05-23), pages I-469, XP010719154 ISBN: 978-0-7803-8251-0 ----- -/-- | | H04N G09G |

The present search report has been drawn up for all claims

| Place of search | Date of completion of the search | Examiner |
|---|---|---|
| Berlin | 11 January 2010 | Kassow, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 169 941 A1**

Europäisches
Patentamt

European
Patent Office

Office européen
des brevets

# EUROPEAN SEARCH REPORT

Application Number

EP 09 17 0956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BERNARD T M ED - VANDEWALLE J ET AL: "LOCAL AND ISOTROPIC ERROR DIFFUSION: WHY AND HOW?" SIGNAL PROCESSING THEORIES AND APPLICATIONS. BRUSSELS, AUG. 24 - 27, 1992; [PROCEEDINGS OF THE EUROPEAN SIGNAL PROCESSING CONFERENCE (EUSIPCO)], AMSTERDAM, ELSEVIER, NL, vol. 3, 24 August 1992 (1992-08-24), pages 1465-1468, XP000356519 ----- | | |
| P,X | EP 2 086 216 A (SONY CORP [JP]) 5 August 2009 (2009-08-05) * the whole document * ----- | 1-4,6-9, 11-15 | |

TECHNICAL FIELDS
SEARCHED (IPC)

The present search report has been drawn up for all claims

| Place of search | Date of completion of the search | Examiner |
|---|---|---|
| Berlin | 11 January 2010 | Kassow, Harald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................

& : member of the same patent family, corresponding
    document

EPO FORM 1503 03.82 (P04C01)

42

## ANNEX TO THE EUROPEAN SEARCH REPORT
## ON EUROPEAN PATENT APPLICATION NO.

EP 09 17 0956

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2010

| Patent document cited in search report | | Publication date | Patent family member(s) | | Publication date |
|---|---|---|---|---|---|
| JP 11088693 | A | 30-03-1999 | NONE | | |
| WO 0131623 | A | 03-05-2001 | EP | 1141932 A1 | 10-10-2001 |
| | | | JP | 2003513317 T | 08-04-2003 |
| | | | TW | 505908 B | 11-10-2002 |
| | | | US | 6603451 B1 | 05-08-2003 |
| EP 1583358 | A | 05-10-2005 | EP | 1583359 A2 | 05-10-2005 |
| | | | EP | 1583360 A2 | 05-10-2005 |
| US 6795085 | B1 | 21-09-2004 | NONE | | |
| EP 2086216 | A | 05-08-2009 | CN | 101500064 A | 05-08-2009 |
| | | | JP | 2009207113 A | 10-09-2009 |
| | | | KR | 20090084732 A | 05-08-2009 |
| | | | US | 2009196525 A1 | 06-08-2009 |

EPO FORM P0459

**REFERENCES CITED IN THE DESCRIPTION**

**Patent documents cited in the description**

- JP 3959698 B

- JP 2008247291 A